# EUROPÄISCHE PATENTSCHRIFT

(11) **EP 4 147 121 B1**
(45) Veröffentlichungstag und Bekanntmachung des Hinweises auf die Patenterteilung: **04.09.2024**
(21) Anmeldenummer: 21731117.4
(22) Anmeldetag: 04.06.2021
(51) Int. Cl.: G06F 8/30, G06F 8/71, G06F 9/451

(54) **VERFAHREN ZUM ERSTELLEN UND AUSFÜHREN EINES STEUERPROGRAMMS ZUM STEUERN EINES AUTOMATISIERUNGSSYSTEMS UND AUTOMATISIERUNGSSYSTEM**
METHOD FOR CREATING AND EXECUTING A CONTROL PROGRAM FOR CONTROLLING AN AUTOMATION SYSTEM, AND AUTOMATION SYSTEM
PROCÉDÉ DE CRÉATION ET D'EXÉCUTION D'UN PROGRAMME DE COMMANDE POUR COMMANDER UN SYSTÈME D'AUTOMATISATION, ET SYSTÈME D'AUTOMATISATION

(30) Priorität: 05.06.2020 DE 102020115028
(43) Veröffentlichungstag der Anmeldung: 15.03.2023
(73) Patentinhaber: Beckhoff Automation GmbH, 33415 Verl (DE)
(72) Erfinder: DREESEN, Ralf, 33397 Rietberg (DE)
(74) Vertreter: Patentanwaltskanzlei WILHELM & BECK
(86) Internationale Anmeldenummer: PCT/EP2021/065029
(87) Internationale Veröffentlichungsnummer: WO 2021/245247

(56) Entgegenhaltungen:
- US-A1- 2012 246 610
- US-A1- 2014 258 970
- ANONYMOUS: "Was ist Festplatten-Cache (Disk Cache)? - Definition von WhatIs.com", 1 August 2014 (2014-08-01), pages 1 - 3, XP055910123, Retrieved from the Internet <URL:https://www.computerweekly.com/de/definition/Festplatten-Cache-Disk-Cache> [retrieved on 20220407]
- MAX GOLDMAN: "Role-based interfaces for collaborative software development", USER INTERFACE SOFTWARE AND TECHNOLOGY, ACM, 2 PENN PLAZA, SUITE 701 NEW YORK NY 10121-0701 USA, 16 October 2011 (2011-10-16), pages 23 - 26, XP058005915, ISBN: 978-1-4503-1014-7, DOI: 10.1145/2046396.2046410
- ANONYMOUS: "Integrated development environment - Wikipedia", 23 May 2020 (2020-05-23), pages 1 - 7, XP055835201, Retrieved from the Internet <URL:https://en.wikipedia.org/w/index.php?title=Integrated_development_environment&oldid=958373165> [retrieved on 20210826]

## Beschreibung

### Stand der Technik

US 2014/258970 A1 offenbart eine web-basierte Entwicklungsumgebung bei welcher die Änderungen der Entwickler unmittelbar an einen zentralen Server geschickt werden. Dieser verteilt die Änderungen umgehend an die andere Entwickler, so dass alle Entwickler ständig den gleichen Stand des Programmcodes haben.

US 2012/246610 A1 offenbart eine web-basierte Entwicklungsumgebung bei welcher mehrere Entwickler gemeinsam an einem Softwareprojekt arbeiten können und welches eine Versionierung unterstützt.

MAX GOLDMAN: "Role-based interfaces for collaborative software development" offenbart eine web-basierte Entwicklungsumgebung bei welcher die Änderungen der Entwickler unmittelbar mit den anderen Entwicklern geteilt werden und erst dann integriert werden wenn dies ohne Fehler möglich ist

### Beschreibung

Verfahren zum Erstellen und Ausführen eines Steuerprogramms zum Steuern eines Automatisierungssystems und Automatisierungssystem

Die Erfindung die in Anspruch 1 definiert ist betrifft ein Verfahren zum Erstellen und Ausführen eines Steuerprogramms zum Steuern eines Automatisierungssystems. Darüber hinaus betrifft die Erfindung ein Automatisierungssystem das in Anspruch 15 definiert ist und das eingerichtet ist, das Verfahren zum Erstellen und Ausführen eines Steuerprogramms zum Steuern eines Automatisierungssystems auszuführen.

Diese Patentanmeldung beansprucht die Priorität der deutschen Patentanmeldung DE 10 2020 115 028.8, deren Offenbarungsgehalt hiermit durch Rückbezug aufgenommen wird.

Die technische Disziplin der Automatisierungstechnik (Implementieren, Messen, Steuern/Regeln, Kommunikation, Mensch/Maschine-Schnittstelle, Sicherheit etc.) hat zur Aufgabe, Maschinen inkl. Industrieroboter und/oder Anlagen zu automatisieren, d. h. aus sich heraus selbständig und ohne Mitwirkung eines Menschen betreiben zu können. Ein Grad der Automatisierung (Verhältnis der automatisierten Fertigungsschritte zu allen Fertigungsschritten) in einem Automatisierungssystem ist umso höher, je unabhängiger eine jeweilige Maschine in einer Anlage und/oder eine betreffende Anlage von menschlichen Eingriffen ist bzw. sind.

Ziele der Automatisierungstechnik sind unter anderem eine Entlastung des Menschen von gefährlichen, anstrengenden und/oder eintönigen Tätigkeiten, eine Verbesserung einer Qualität durch die technische Anlage, eine höhere Leistungsfähigkeit der Anlage und eine Kostenreduktion durch die Anlage. Durch Fortschritte bei Maschinen, einer Signalerfassung, einer Signalverarbeitung und/oder einer Kommunikation (Vernetzung) von Komponenten innerhalb des Automatisierungssystems, kann der Automatisierungsgrad einer bestehenden oder einer neuen Anlage im Vergleich mit dem Stand der Technik deutlich gesteigert werden.

Zur Steuerung von Automatisierungssysteme werden für gewöhnlich speicherprogrammierbare Steuerungen (SPS) eingesetzt. Speicherprogrammierbare Steuerungen kommen unter anderem in der Prozessleittechnik zum Einsatz, etwa zur Steuerung von Fertigungsstraßen oder chemischen Anlagen. Als speicherprogrammierbare Steuerungen ausgebildete Maschinensteuerungen steuern oder regeln Maschinen und Anlagen, indem Aktoren wie Relais, Antriebe oder Ventile in Abhängigkeit von Messwerten, die von an der Maschine oder der Anlage angeordneten Sensoren erfasst wurden, gesteuert werden.

Speicherprogrammierbare Steuerungen arbeiten in der Regel ereignisgesteuert und führen ein Steuerprogramm periodisch aus. Innerhalb eines Ausführungszyklus werden dabei die Signale der Sensoren eingelesen und auf Grundlage der Signale Ausgabewerte für die Aktoren berechnet und ausgegeben.

Zur Steuerung von Automatisierungssystemen werden entsprechend programmierte Steuerprogramme benötigt. Zum Erstellen von entsprechenden Steuerprogrammen werden üblicherweise entsprechend ausgestaltete Integrierte Entwicklungsumgebungen (Integrated Development Environments - IDE) verwendet, die dem Nutzer Eingabemöglichkeiten in Form von Editoren bereitstellen, die jeweils über verschiedene Eingabehilfen, wie beispielsweise Autovervollständigung des geschriebenen Programmcodes, bereitstellen. Sogenannte IDE ermöglichen dem Nutzer ferner Übersetzungsfunktionen, die eine Übersetzung des erstellten Programmcodes in eine Binärsprache ermöglichen. Ferner sind IDEs unter anderem eingerichtet, Debuggingprozesse durchzuführen, die dem Nutzer ermöglichen, Fehler in dem erstellten Programmcode zu finden.

Üblicherweise werden IDEs lokal auf einem Desktopcomputer oder auf einem Laptop betrieben. Dies setzt jedoch voraus, dass eine entsprechende IDE auf dem zu verwendenden Computer installiert ist und der verwendete Computer genügend Rechenleistung aufweist, die genannten Funktionen auszuführen. Auch sind übliche IDEs für entsprechende Betriebssysteme spezifiziert. Der Nutzer ist somit zum Erstellen von Programmcode an den jeweiligen Computer gebunden, auf dem die IDE installiert ist. Dies stellt eine erhebliche Einschränkung in der Flexibilität des Nutzers und der Art und Weise dar, wie die Programmierung von Steuerprogrammen in der Automatisierungstechnik durchführbar ist.

Eine Aufgabe der Erfindung ist somit, ein Verfahren zum Erstellen und Ausführen eines Steuerprogramms zum Steuern eines Automatisierungssystems bereitzustellen, dass einem Nutzer einen hohen Grad an Flexibilität ermöglicht. Eine weitere Aufgabe der Erfindung ist es, ein entsprechendes Automatisierungssystem bereitzustellen, das eingerichtet ist, das Verfahren zum Erstellen und Ausführen eines Steuerprogramms zum Steuern eines Automatisierungssystems, auszuführen.

Die genannten Aufgaben werden durch ein Verfahren und ein Automatisierungssystem gemäß den unabhängigen Ansprüchen gelöst. Vorteilhafte Weiterbildungen sind in den abhängigen Ansprüchen angeben.

Nach einem Aspekt der Erfindung wird ein Verfahren zum Erstellen und Ausführen eines Steuerprogramms zum Steuern eines Automatisierungssystems mit einer Steuerung und einem mit der Steuerung verbundenen Webserver bereitgestellt, wobei das Verfahren umfasst:
Erstellen einer Verbindung zwischen einem Client-Gerät und dem Webserver über einen auf dem Client-Gerät ausgeführten Webbrowser in einem Serververbindungsschritt, wobei auf dem Webserver eine webbasierte Entwicklungsumgebung mit einem Eingabemodul zum Erstellen eines Programmcodes und einem Übersetzungsmodul zum Übersetzen des erstellten Programmcodes installiert ist, wobei das Eingabemodul in dem Webbrowser ausführbar ist, und wobei das Übersetzungsmodul eingerichtet ist, einen Programmcode einer ersten Programmiersprache in einen Programmcode einer Binärsprache zu übersetzen;
Ausführen einer Instanz des Eingabemoduls im Webbrowser durch das Client-Gerät und Erstellen einer Verbindung des Client-Geräts mit einer Arbeitsumgebung des Webservers und dem Übersetzungsmodul der Arbeitsumgebung über die im Webbrowser ausgeführte Instanz des Eingabemoduls in einem Arbeitsumgebungsverbindungsschritt, wobei innerhalb der Arbeitsumgebung das Übersetzungsmodul ausführbar ist;
Erstellen einer ersten Version eines Programmcodes eines Steuerprogramms für das Automatisierungssystem in der ersten Programmiersprache in der im Webbrowser ausgeführten Instanz des Eingabemoduls in einem Codeerstellungsschritt;
Übertragen der erstellten ersten Version des Programmcodes von der im Webbrowser ausgeführten Instanz des Eingabemoduls an die Arbeitsumgebung des Webservers in einem Programmcodeübertragungsschritt;
Schreiben der übertragenen ersten Version des Programmcodes in eine Programmdatei in der Arbeitsumgebung in einem Schreibschritt;
Ausführen des Übersetzungsmoduls in der Arbeitsumgebung und Übersetzen des in der ersten Programmiersprache erstellten und in die Programmdatei geschriebenen Programmcodes durch das Übersetzungsmodul in einen Programmcode der Binärsprache in einem Übersetzungsschritt;
Übertragen des Programmcodes in der Binärsprache von der Arbeitsumgebung an die Steuerung des Automatisierungssystems in einem Binärcodeübertragungsschritt; und
Ausführen des Programmcodes in der Binärsprache durch die Steuerung des Automatisierungssystems und Steuern des Automatisierungssystems auf Basis des Programmcodes in einem Ausführungsschritt.

Hierdurch wird der technische Vorteil erreicht, dass ein Verfahren zum Erstellen und Ausführen eines Steuerprogramms zum Steuern eines Automatisierungssystems bereitgestellt werden kann, bei dem eine webbasierte Programmierung des Programmcodes des Steuerprogramms über eine webbasierte Entwicklungsumgebung ermöglicht ist. Hierzu ist auf einem Webserver eine webbasierte Entwicklungsumgebung mit einem Eingabemodul zum Erstellen eines Programmcodes und einem Übersetzungsmodul zum Übersetzen des erstellten Programmcodes in ein Binärprogramm zum Steuern des Automatisierungssystems installiert. Das Eingabemodul der webbasierten Entwicklungsumgebung ist hierbei in einem Webbrowser ausführbar. Das Übersetzungsmodul ist hingegen auf dem Webserver ausführbar und eingerichtet, einen Programmcode einer beliebigen Programmiersprache in einen Programmcode einer Binärsprache zu übersetzen.

Zum Erstellen des Steuerprogramms kann ein Nutzer somit über einen auf einem beliebigen Client-Gerät ausgeführten Webbrowser eine Verbindung zum Webserver aufbauen und eine Instanz des Eingabemoduls der webbasierten Entwicklungsumgebung im auf dem Client-Gerät ausgeführten Webbrowser ausführen. Das Client-Gerät kann ein Desktop-Computer, Laptop oder ein beliebiges Mobilgerät sein. Hierdurch wird erreicht, dass ein Nutzer zum Erstellen eines Programmcodes eines Steuerprogramms von einem beliebigen Client-Gerät aus agieren kann. Es ist somit nicht erforderlich, dass eine Entwicklungsumgebung inklusive eines Eingabemoduls auf dem verwendeten Client-Gerät installiert ist, um einen Programmierprozess zum Erstellen des Programmcodes durchzuführen.

Die im Webbrowser des Client-Geräts ausgeführte Instanz des Eingabemoduls ist plattformunabhängig und kann auf beliebigen Client-Geräten, die über beliebige Betriebssysteme gesteuert werden, ausgeführt werden. Hierdurch wird eine Plattformunabhängigkeit der webbasierten Entwicklungsumgebung erreicht.

Zum Erstellen des Programmcodes des Steuerprogramms erstellt der Nutzer im Folgenden über die im Webbrowser ausgeführte Instanz des Eingabemoduls eine Verbindung zu einer auf dem Webserver eingerichteten Arbeitsumgebung. In der Arbeitsumgebung kann ein Programmierprojekt eingerichtet sein, das alle zur Erstellung des Programmcodes notwendigen Dateien, Verzeichnisse oder Datenbanken enthält. Die Arbeitsumgebung ermöglicht somit eine Strukturierung des Webservers, wodurch unterschiedliche Programmierprojekte voneinander separierbar angeordnet werden können. Die Arbeitsumgebung kann beispielsweise mit einem passwortgeschützten Zugang versehen sein und eine Verbindung ausschließlich autorisierten Nutzern ermöglichen. Hierdurch können sensible Daten unterschiedlicher Nutzer auf dem Webserver gespeichert sein.

Durch die im Webbrowser ausgeführte Instanz des Eingabemoduls kann der Nutzer im Folgenden von dem jeweilig genutzten Client-Gerät aus eine Version des Programmcodes des Steuerprogramms in einer beliebigen Programmiersprache erstellen. Durch die Ausführung der Instanz des Eingabemoduls im Webbrowser des verwendeten Client-Geräts ist der Nutzer zum Erstellen des Programmcodes an kein bestimmtes Client-Gerät gebunden, wodurch dem Nutzer ein hoher Grad an Flexibilität ermöglicht ist und der Nutzer durch die Verwendung eines beliebigen Client-Geräts an einem beliebigen Ort einen Programmcode für ein Steuerprogramm erstellen kann.

Im Programmcodeübertragungsschritt können ausschließlich die im Codeerstellungsschritt vorgenommenen Änderungen am Programmcode, auf deren Basis die erste Version des Programmcodes erstellt wurde, von der im Webbrowser ausgeführten Instanz des Eingabemoduls über die Internetverbindung an den Webserver übertragen werden. Dies ist insbesondere von Interesse, wenn die erste Version des Programmcodes eine geänderte Version eines bereits erstellten Programmcodes darstellt.

Die erste Programmiersprache kann hierbei eine beliebige Programmiersprache, bzw. eine aus dem Stand der Technik bekannte Programmiersprache zum Erstellen von Steuerprogrammen von Automatisierungssystemen sein. Zum Übersetzen des erstellten Programmcodes in der vom Nutzer ausgewählten ersten Programmiersprache in einen durch die Steuerung des Automatisierungssystems ausführbaren Binärcode übermittelt die im Webbrowser ausgeführte Instanz des Eingabemoduls den erstellten Programmcode an den Webserver und veranlasst diesen, den übermittelten Programmcode in einer Programmdatei innerhalb der Arbeitsumgebung zu schreiben.

Eine Programmdatei kann hierbei als ein Verbundtyp ausgebildet sein und eine Mehrzahl von in entsprechenden Verzeichnissen angeordneten Dateien aufweisen. Hierdurch kann erreicht werden, dass der erstellte Programmcode in der vom Nutzer ausgewählten Programmiersprache auf dem Server, insbesondere in der entsprechenden Arbeitsumgebung, gespeichert wird, sodass eine Speicherung des erstellten Programmcodes auf dem vom Nutzer verwendeten Client-Gerät zur Sicherung des Programmierprojekts nicht notwendig ist. Hierdurch kann erreicht werden, dass bei weiterem Bearbeiten des erstellten Programmcodes der Nutzer nicht an das zunächst ausgewählte Client-Gerät gebunden ist, sondern von beliebigen Client-Geräten aus eine Bearbeitung des bereits erstellten Programmcodes durchführen kann.

Die Programmdatei kann ferner vergleichbar zu einem Puffer als eine Datei in einem Hauptspeicher des Webservers ausgebildet sein, so dass Änderungen der Programmdatei nicht automatisch in einem dauerhaften Datenspeicher, wie einer Festplatte, des Webservers gespeichert werden müssen.

Darüber hinaus kann die Programmdatei mit einer Assoziationsdatei im dauerhaften Datenspeicher des Webservers assoziiert sein, in der die Inhalte der Programmdatei gespeichert werden können, so dass eine Speicherung der Inhalte der Programmdatei im dauerhaften Speicher des Webservers erreicht werden kann.

Ferner wird erreicht, dass ein Speicherbereich des verwendeten Client-Geräts zur Speicherung des erstellten Programmcodes nicht belastet wird. Hierdurch können Ressourcen des verwendeten Client-Geräts eingespart werden.

Durch Ausführen des Übersetzungsmoduls auf dem in die Programmdatei geschriebenen Programmcode kann dieser in einen entsprechenden Binärcode übersetzt werden, der zum Steuern des Automatisierungssystems durch die Steuerung des Automatisierungssystems ausführbar ist. Hierdurch kann der Übersetzungsprozess auf den Webserver ausgelagert werden, sodass eine rechenintensive Übersetzung des erstellten Programmcodes auf dem Client-Gerät vermieden werden kann. Somit kann eine Einsparung von Ressourcen des verwendeten Client-Geräts zum Erstellen des Programmcodes erreicht werden.

Zum Ausführen des durch das Übersetzungsmodul erstellten Binärcodes des zuvor in der Instanz des Eingabemoduls erstellten Programmcodes durch die Steuerung des Automatisierungssystems kann der generierte Binärcode direkt von dem Webserver, insbesondere von der Arbeitsumgebung, an eine mit dem Webserver verbundene Steuerung des Automatisierungssystems übertragen und von der Steuerung ausgeführt werden. Hierdurch kann ein reibungsloser Übergang zwischen Erstellen des Programmcodes und Ausführen des jeweiligen Steuerprogramms durch die Steuerung des Automatisierungssystems und ein damit verbundenes Steuern des Automatisierungssystems erreicht werden. Ein umständlicher Prozess, in dem ansonsten ein Programmcode zunächst auf einem speziell dafür eingerichteten Client-Gerät erstellt und in einen Binärcode übersetzt wird, der darauf folgend auf eine Steuerung eines Automatisierungssystems aufgespielt werden muss, sodass die Steuerung das jeweilige Steuerprogramm ausführen und somit das Automatisierungssystem steuern kann, kann somit vermieden werden.

Nach einer Ausführungsform umfasst das Verfahren ferner:
Erstellen einer weiteren Verbindung zwischen einem weiteren Client-Gerät und dem Webserver über einen auf dem weiteren Client-Gerät ausgeführten weiteren Webbrowser in einem weiteren Serververbindungsschritt;
Ausführen einer weiteren Instanz des Eingabemoduls im weiteren Webbrowser des weiteren Client-Geräts und Erstellen einer weiteren Verbindung des weiteren Client-Geräts mit der Arbeitsumgebung des Webservers über die im weiteren Webbrowser ausgeführte weitere Instanz des Eingabemoduls in einem weiteren Arbeitsumgebungsverbindungsschritt; Übertragen der in die Programmdatei geschriebenen ersten Version des Programmcodes an die im weiteren Webbrowser des weiteren Client-Geräts ausgeführte weitere Instanz des Eingabemoduls in einem weiteren Programmcodeübertragungsschritt;
Vornehmen von Änderungen am Programmcode und Erstellen einer zweiten Version des Programmcodes in der ersten Programmiersprache in der im weiteren Webbrowser des weiteren Client-Geräts ausgeführten weiteren Instanz des Eingabemoduls in einem Änderungserstellungsschritt;
Übertragen der zweiten Version des Programmcodes von der weiteren Instanz des Eingabemoduls an die Arbeitsumgebung des Webservers in einem Änderungsübertragungsschritt;
Schreiben der zweiten Version des Programmcodes in die Programmdatei in der Arbeitsumgebung in einem Änderungsschreibschritt;
Übertragen der zweiten Version des Programmcodes von der Arbeitsumgebung an die im Webbrowser ausgeführte Instanz des Eingabemoduls des Client-Geräts in einem zweiten Änderungsübertragungsschritt; und
Anzeigen der zweiten Version des Programmcodes in der im Webbrowser ausgeführten Instanz des Eingabemoduls des Client-Geräts in einem Anzeigeschritt.

Hierdurch wird der technische Vorteil erreicht, dass eine simultane Bearbeitung des erstellten Programmcodes durch verschiedene Nutzer ermöglicht ist. Hierzu kann eine Verbindung des weiteren Client-Geräts mit dem Webserver über einen auf dem weiteren Client-Gerät ausgeführten weiteren Webbrowser hergestellt werden. Im Folgenden kann in dem weiteren Webbrowser des weiteren Client-Geräts eine weitere Instanz des Eingabemoduls ausgeführt werden. Das weitere Client-Gerät kann hierbei ein beliebiger Desktop, Laptop oder ein beliebiges Mobilgerät sein und kann mit einem beliebigen Betriebssystem ausgeführt werden, das auch von dem Betriebssystem verschieden von dem des bereits mit dem Webserver verbundene Client-Geräts sein kann. Ferner können die beiden Webbrowser der beiden Client-Geräte verschiedene Webbrowser sein. Die verschiedenen Instanzen des Eingabemoduls können somit in verschiedenen Webbrowsern unterschiedlicher Client-Geräte ausgeführt werden.

Über die weitere Instanz des Eingabemoduls, die im weiteren Webbrowser des weiteren Client-Geräts ausgeführt wird, kann eine Verbindung zur Arbeitsumgebung hergestellt werden und nach Übertragung des in die Programmdatei geschriebenen Programmcodes vom Webserver an die im weiteren Webbrowser ausgeführte weitere Instanz des Eingabemoduls kann der erstellte Programmcode in der weiteren Instanz des Eingabemoduls am weiteren Client-Gerät angezeigt werden. Hierdurch wird ermöglicht, dass verschiedene Nutzer von verschiedenen Client-Geräten aus simultan eine Bearbeitung eines Programmcodes durchführen können. Verschiedene Nutzer können somit zeitgleich zum Erstellen des gleichen Programmcodes beitragen und können dies von unterschiedlichen Geräten aus durchführen.

Über die weitere Instanz des Eingabemoduls kann der weitere Nutzer Änderungen an dem erstellten Programmcode durchführen und eine zweite Version des Programmcodes erstellen. Die zweite Version des Programmcodes kann im Folgenden von der weiteren Instanz des Eingabemoduls, die im weiteren Webbrowser ausgeführt wird, an den Webserver, insbesondere an die Arbeitsumgebung übertragen und in die Programmdatei geschrieben werden. Die in der Arbeitsumgebung des Webservers gespeicherte Programmdatei kann sowohl durch den ersten Nutzer als auch den zweiten Nutzer modifiziert werden.

Die in die Programmdatei geschriebene zweite Version kann im Folgenden an den ersten Nutzer, insbesondere an die im Webbrowser des Client-Geräts ausgeführte Instanz des Eingabemoduls übertragen und in dieser angezeigt werden. Hierdurch wird erreicht, dass beide Nutzer die identische Version des Programmcodes zeitgleich in dem im Webbrowser des jeweils verwendeten Client-Geräts ausgeführten Eingabemodul angezeigt werden. Die unterschiedlichen Nutzer können somit die Änderungen des jeweils anderen Nutzers nachverfolgen, sodass eine Zusammenarbeit der beiden Nutzer zum Erstellen des Programmcodes ermöglicht ist. Die einzelnen Nutzer sind somit in der Lage, von ihrem verwendeten Client-Gerät Änderungen des Programmcodes zu erwirken und die Änderungen der jeweils anderen Nutzer nachzuverfolgen.

Die durch den weiteren Nutzer des weiteren Client-Geräts erstellte zweite Version des Programmcodes kann in die Programmdatei geschrieben und somit auf dem Webserver gespeichert werden. Ferner kann die in die Programmdatei geschriebene zweite Version durch das auf dem Webserver, insbesondere in der Arbeitsumgebung, ausgeführte Übersetzungsmodul in einen entsprechenden Binärcode übersetzt, dieser an die Steuerung des Automatisierungssystems übertragen und von dieser zum Steuern des Automatisierungssystems ausgeführt werden. Hierdurch ist somit ermöglicht, dass über verschiedene Nutzer, unter Verwendung verschiedener Client-Geräte, in Zusammenarbeit ein Programmcode erstellt, diese unter Verwendung des Webservers übersetzt und durch eine Steuerung des Automatisierungssystems ausgeführt werden kann. Hierdurch kann eine kooperative Zusammenarbeit zum Durchführen eines gemeinsamen Programmierprojekts zum Erstellen eines Steuerprogramms für ein Automatisierungssystem erreicht werden.

Nach einer Ausführungsform werden im Änderungsübertragungsschritt und im zweiten Änderungsübertragungsschritt von der zweiten Version des Programmcodes ausschließlich die in der weiteren Instanz des Eingabemoduls vorgenommenen Änderungen des Programmcodes übertragen.

Hierdurch wird der technische Vorteil erreicht, dass zur Übertragung der durch die verschiedenen Nutzer erstellten verschiedenen Versionen des Programmcodes an den Webserver ein möglichst geringes Datenvolumen übertragen wird. Hierdurch kann eine schnelle Übertragung und somit eine möglichst zeitgleiche Anzeige der vorgenommenen Änderungen in den einzelnen Instanzen des Eingabemoduls der verschiedenen Nutzer erreicht werden. Durch die Übertragung ausschließlich der vorgenommenen Änderungen an den einzelnen Versionen des Programmcodes kann eine zeitnahe Aktualisierung des in die Programmdatei geschriebenen Programmcodes erreicht werden.

Nach einer Ausführungsform werden im Änderungsübertragungsschritt die in der weiteren Instanz des Eingabemoduls vorgenommenen Änderungen der zweiten Version des Programmcodes und die erste Version des Programmcodes übertragen, wobei das Verfahren ferner umfasst:
Vergleichen der im zweiten Änderungsübertragungsschritt übertragenen ersten Version des Programmcodes mit der in die Programmdatei geschriebenen Version des Programmcodes in einem Vergleichsschritt;
Ermitteln eines Synchronisationsfehlers in einem Fehlerermittlungsschritt, falls die erste Version des Programmcodes nicht mit der in die Programmdatei geschriebenen Version des Programmcodes übereinstimmt;
Übertragen der in die Programmdatei geschriebenen Version des Programmcodes von der Arbeitsumgebung an die im weiteren Webbrowser ausgeführten weiteren Instanz des Eingabemoduls in einem Versionsübertragungsschritt; und
Anzeigen der übertragenen Version des Programmcodes in der im weiteren Webbrowser ausgeführten weiteren Instanz des Eingabemoduls in einem Versionsanzeigeschritt.

Hierdurch wird der technische Vorteil erreicht, dass eine Synchronisation der Bearbeitung des Programmcodes durch die beiden Nutzer ermöglicht ist. Indem neben den vorgenommenen Änderungen zusätzlich die jeweilige Version des Programmcodes, an denen die Änderungen durch den jeweiligen Nutzer vorgenommen wurden, von der jeweiligen Instanz des Eingabemoduls an den Webserver übermittelt wird und die übermittelte Version des Programmcodes mit der in die Programmdatei geschriebenen Version des Programmcodes verglichen wird, kann sichergestellt werden, dass bei gleichzeitiger Bearbeitung des Programmcodes durch mehrere Nutzer alle Nutzer jeweils die identische Version des Programmcodes bearbeiten.

Stimmt die mit den vorgenommenen Änderungen übermittelte Version des Programmcodes nicht mit der in die Programmdatei geschriebenen Version des Programmcodes überein, so werden die übermittelten Änderungen nicht in die Programmdatei geschrieben und stattdessen werden dem jeweiligen Nutzer die aktuell in die Programmdatei geschriebene Version übermittelt und in der jeweiligen Instanz des Eingabemoduls angezeigt. Somit ist gewährleistet, dass alle mit der Arbeitsumgebung verbundenen Nutzer jeweils die aktuelle Version in die Programmdatei geschriebenen Programmcodes angezeigt bekommen, sodass alle das jeweilige Programmprojekt bearbeitenden Nutzer eine identische Version des Programmcodes bearbeiten können.

Nach einer Ausführungsform werden im Änderungsübertragungsschritt die in der weiteren Instanz des Eingabemoduls vorgenommenen Änderungen der zweiten Version des Programmcodes und Informationen bezüglich der ersten Version des Programmcodes übertragen, wobei das Verfahren ferner umfasst:
Vergleichen der im zweiten Änderungsübertragungsschritt übertragenen Information bezüglich der ersten Version des Programmcodes mit der in die Programmdatei geschriebenen Version des Programmcodes in einem Vergleichsschritt;
Ermitteln eines Synchronisationsfehlers in einem Fehlerermittlungsschritt, falls die Information bezüglich der ersten Version des Programmcodes nicht mit der in die Programmdatei geschriebenen Version des Programmcodes übereinstimmt;
Übertragen der in die Programmdatei geschriebenen Version des Programmcodes von der Arbeitsumgebung an die im weiteren Webbrowser ausgeführten weiteren Instanz des Eingabemoduls in einem Versionsübertragungsschritt; und
Anzeigen der übertragenen Version des Programmcodes in der im weiteren Webbrowser ausgeführten weiteren Instanz des Eingabemoduls in einem Versionsanzeigeschritt.

Hierdurch wird der technische Vorteil erreicht, dass durch die Übertragung der Information bezüglich der ersten Version zum Überprüfen der Übereinstimmung der ersten Version mit der in die Programmdatei geschriebenen Version ein verringertes Datenvolumen zu übertragen ist.

Eine Information bezüglich der ersten Version kann beispielsweise eine Versionsnummer sein, die Version des Programmcodes eindeutig identifiziert. Im Vergleichsschritt kann dann die Versionsnummer der ersten Version des Programmcodes mit der Versionsnummer der in die Programmdatei gespeicherten Version des Programmcodes verglichen werden, um eine Übereinstimmung oder Abweichung der Versionsnummern zu ermitteln.

Nach einer Ausführungsform wird im Programmcodeübertragungsschritt jede der im Codeerstellungsschritt vorgenommenen Eingaben in einer individuellen Nachricht übertragen, wobei im Änderungsübertragungsschritt jeder der vorgenommenen Änderungen an der ersten Version des Programmcodes in einer individuellen Nachricht übertragen wird.

Hierdurch wird der technische Vorteil erreicht, dass eine instantane Verarbeitung der vorgenommenen Änderungen durch den Webserver und eine damit verbundene instantane Aktualisierung der in die Programmdatei geschriebenen Versionen des Programmcodes ermöglicht ist. Eine Änderung des Programmcodes kann hierbei ein einzelner Tastenanschlag des Client-Geräts bzw. ein einzelnes Hinzufügen oder Löschen eines Zeichens in dem in der jeweiligen Instanz des Eingabemoduls angezeigten Programmcodes sein.

Nach einer Ausführungsform umfasst das Übersetzungsmodul ferner ein Analysemodul zum Ausführen einer semantischen Analyse und/oder einer syntaktischen Analyse des in erstellten Programmcodes, wobei das Verfahren ferner umfasst:
Ausführen einer globalen Analyse des erstellten und in die Programmdatei geschriebenen Programmcodes in der ersten Programmiersprache durch das Analysemodul und Ermitteln von globalen Analyseergebnissen in einem globalen Analyseschritt, wobei die globale Analyse des Programmcodes eine semantische Analyse und/oder eine syntaktische Analyse des gesamten Programmcodes auf Basis einer Semantik und/oder einer Grammatik der ersten Programmiersprache umfasst;
Übertragen von im globalen Analyseschritt ermittelten globalen Analyseergebnissen an die im Webbrowser ausgeführte Instanz des Eingabemoduls des Client-Geräts und/oder an die im weiteren Webbrowser ausgeführte weitere Instanz des Eingabemoduls des weiteren Client-Geräts in einem Analyseergebnisübertragungsschritt; und Anzeigen der übertragenen globalen Analyseergebnisse in der im Webbrowser ausgeführten Instanz des Eingabemoduls des Client-Geräts und/oder in der im weiteren Webbrowser ausgeführten weiteren Instanz des Eingabemoduls des weiteren Client-Geräts in einem Analyseergebnisanzeigeschritt.

Hierdurch wird der technische Vorteil erreicht, dass während des Programmierprozesses auf dem Webserver, insbesondere in der Arbeitsumgebung des Webservers, eine Analyse des in die Programmdatei geschriebenen Programmcodes bezüglich der Richtigkeit des erstellten Programmcodes im Hinblick auf Semantik und Grammatik der jeweils verwendeten Programmiersprache durchgeführt werden kann. Ferner wird erreicht, dass dem Nutzer während des Programmiervorgangs entsprechende Ergebnisse der semantischen bzw. syntaktischen Analyse des erstellten Programmcodes in der jeweils verwendeten Instanz des Eingabemoduls angezeigt werden können, sodass der Nutzer bereits während des Programmierens entsprechende Fehler des erstellten Programmcodes beheben kann. Hierdurch wird ein möglichst einfacher Programmiervorgang ermöglicht, bei dem dem Nutzer gegebenenfalls syntaktische oder semantische Fehler des Programmcodes angezeigt werden.

Nach einer Ausführungsform ist die Übertragung der globalen Analyseergebnisse als eine Antwort des Webservers auf eine Poll-Anfrage der im Webbrowser ausgeführten Instanz des Eingabemoduls des Client-Geräts und/oder auf eine Poll-Anfrage der im weiteren Webbrowser ausgeführten weiteren Instanz des Eingabemoduls des weiteren Client-Geräts ausgebildet.

Hierdurch wird der technische Vorteil erreicht, dass eine automatische Anzeige der Analyseergebnisse in der jeweils vom Nutzer verwendeten Instanz des Eingabemoduls bereitgestellt werden kann. Hierzu können von der Instanz des Eingabemoduls einem voreingestellten zeitlichen Abstand entsprechende Anfragen an den Webserver gestellt werden, ob entsprechende globale Analyseergebnisse des Analysemoduls vorliegen. Sobald die durch das Analysemodul durchgeführte Analyse des in die Programmdatei geschriebenen Programmcodes abgeschlossen ist, werden die entsprechenden Analyseergebnisse vom Webserver an die im Webbrowser ausgeführte Instanz des Eingabemoduls übermittelt und von diesem dem Nutzer angezeigt. Der Nutzer wird somit automatisch auf entsprechende semantische oder syntaktische Analyseergebnisse hingewiesen, ohne dass dieser eine entsprechende Anfrage ausführen muss. Der Nutzer bekommt entsprechende Analyseergebnisse somit automatisch durch die von ihm verwendete Instanz des Eingabemoduls angezeigt und muss nicht extra eine entsprechende Analyse in Gang setzen.

Nach einer Ausführungsform umfassen globale Analyseergebnisse Fehlermeldungen bezüglich semantischer und/oder syntaktischer Fehler im erstellen Programmcode, im Programmcode verwendete Programmobjekte und Beziehungen zwischen den im Programmcode verwendeten Programmobjekten, wobei Programmobjekte im Programmcode verwendete Variablen, Funktionen, Datentypen, Namensräume oder andere Objekte umfassen.

Hierdurch wird der technische Vorteil erreicht, dass dem Nutzer in der jeweils verwendeten Instanz des Eingabemoduls eine Vielzahl von Informationen bezüglich des von ihm erstellten Programmcodes angezeigt werden können. Durch die in der globalen Analyse erstellten Analyseergebnisse, die sowohl semantische wie auch syntaktische Fehler des erstellten Programmcodes und/oder im Programmcode verwendete Variablen, Funktionen, Datentypen, Namensräume und andere Instanzen der jeweils verwendeten Programmiersprache umfassen, können dem Nutzer für eine möglichst reibungslose Programmierung des Programmcodes umfassende Informationen und Eingabehilfen bereitgestellt werden.

Nach einer Ausführungsform umfasst der globale Analyseschritt ferner:
Erstellen einer Analyseversion des erstellten und in die Programmdatei geschriebenen Programmcodes in der ersten Programmiersprache durch das Analysemodul in einem Schnappschussschritt, wobei die Analyseversion des Programmcodes der zum Zeitpunkt der Ausführung des globalen Analyseschritts in die Programmdatei geschriebenen Version des Programmcodes entspricht; und
Ausführen der globalen Analyse des Programmcodes in der ersten Programmiersprache auf Basis der Analyseversion im globalen Analyseschritt.

Hierdurch wird der technische Vorteil erreicht, dass während der Durchführung der globalen Analyse durch das Analysemodul eine Bearbeitung des Programmcodes durch die jeweiligen Nutzer ermöglicht ist. Hierzu wird zunächst eine Analyseversion des in die Programmdatei geschriebenen Programmcodes erstellt, auf deren Basis durch das Analysemodul die entsprechende globale Analyse des Programmcodes durchgeführt wird. Während der Durchführung der globalen Analyse durch das Analysemodul, die den gesamten Programmcode umfasst und somit zeitaufwändig ist, können weitere Änderungen der in die Programmdatei geschriebenen Version des Programmcodes vorgenommen werden. Hierdurch kann erreicht werden, dass trotz Durchführung der globalen Analyse durch das Analysemodul der Nutzer den Programmierprozess nicht unterbrechen muss und somit während der Durchführung der Analyse weitere Änderungen am Programmcode durchführen kann. Da das Analysemodul auf der zuvor erstellten Analyseversion des Programmcodes agiert, wird ferner durch weitere Modifikationen der in die Programmdatei geschriebenen Version des Programmcodes die Analyse des Analysemoduls ebenfalls nicht unterbrochen. Somit kann eine zeitgleiche Analyse des Programmcodes durch das Analysemodul und weitere vorgenommene Änderungen des Programmcodes durch die jeweiligen Nutzer erreicht werden.

Nach einer Ausführungsform umfasst das Verfahren ferner:
Erstellen einer aktuellen Version des erstellten und in die Programmdatei geschriebenen Programmcodes in der ersten Programmiersprache durch das Analysemodul in einem Aktualisierungsschritt, wobei eine aktuelle Version des erstellten und in die Programmdatei geschriebenen Programmcodes in der ersten Programmiersprache nach jeder Änderung des Programmcodes durch die Instanz des Eingabemoduls des Client-Geräts und/oder durch die weitere Instanz des Eingabemoduls des weiteren Client-Geräts erstellt wird;
Ausführen einer lokalen Analyse eines Teils des erstellten und in die Programmdatei geschriebenen Programmcodes in der ersten Programmiersprache durch das Analysemodul auf Basis der aktuellen Version des Programmcodes und ermitteln von lokalen Analyseergebnissen in einem lokalen Analyseschritt;
Übertragen der im lokalen Analyseschritt ermittelten lokalen Analyseergebnisse an die im Webbrowser ausgeführte Instanz des Eingabemoduls des Client-Geräts und/oder an die im weiteren Webbrowser ausgeführte weitere Instanz des Eingabemoduls des weiteren Client-Geräts in einem lokalen Analyseergebnisübertragungsschritt; und
Anzeigen der übertragenen lokalen Analyseergebnisse in der im Webbrowser ausgeführten Instanz des Eingabemoduls des Client-Geräts und/oder in der im weiteren Webbrowser ausgeführten weiteren Instanz des Eingabemoduls des weiteren Client-Geräts in einem lokalen Analyseergebnisanzeigeschritt, wobei die lokalen Analyseergebnisse automatische Vervollständigungen, Syntaxhervorhebungen und andere Eingabehilfen für Eingaben in der Instanz des Eingabemoduls und/oder der weiteren Instanz des Eingabemoduls umfassen.

Hierdurch wird der technische Vorteil erreicht, dass dem Nutzer durch das Eingabemodul weitere Eingabehilfen bereitgestellt werden können. Durch die lokale Analyse werden lediglich Teile des erstellten Programmcodes analysiert. Hierzu wird zunächst eine aktuelle Version des in die Programmdatei geschriebenen Programmcodes erstellt und die jeweilige lokale Analyse auf der aktuellen Version ausgeführt. Insbesondere wird für jede Änderung des Programmcodes, die von der jeweiligen Instanz des Eingabemoduls an den Webserver übertragen wird, eine aktuelle Version des Programmcodes erstellt und eine entsprechende lokale Analyse durchgeführt.

Hierdurch können insbesondere Funktionen wie eine Autovervollständigung des in der Instanz des Eingabemoduls erstellten Programmcodes wie auch die Anzeige von Schreibfehlern und ähnlichen Eingabehilfen erreicht werden. Indem für jede Änderung des Programmcodes, die jedes Hinzufügen oder Löschen eines Zeichens des Programmcodes umfassen kann, eine entsprechende aktuelle Version des Programmcodes erstellt wird und eine lokale Analyse der aktuellen Version durchgeführt wird, können für jede durch den Nutzer durchgeführte Änderung entsprechende Anzeigen in dem Eingabemodul der jeweiligen Eingabehilfen, wie Autovervollständigung, Syntaxhervorhebung und Ähnliches, bereitgestellt werden.

Nach einer Ausführungsform ist die Übertragung der lokalen Analyseergebnisse als eine Push-Nachricht des Webservers an die im Webbrowser ausgeführte Instanz des Eingabemoduls des Client-Geräts und/oder an die im weiteren Webbrowser ausgeführte weitere Instanz des Eingabemoduls des weiteren Client-Geräts ausgebildet.

Hierdurch wird der technische Vorteil erreicht, dass eine instantane Anzeige der jeweiligen Eingabehilfen in der jeweiligen Instanz des Eingabemoduls bereitgestellt werden kann. Über die Push-Nachrichten werden somit automatisch durch den Webserver die entsprechenden Ergebnisse der lokalen Analyse an die jeweiligen Instanzen der Eingabemodule übertragen, sobald die entsprechenden lokalen Analysen durchgeführt sind.

Nach einer Ausführungsform umfasst das Analysemodul ein globales Analysenmodul zum Ausführen der globalen Analyse und ein lokales Analysemodul zum Ausführen der lokalen Analyse umfasst.

Hierdurch wird der technische Vorteil erreicht, dass globale Analysen und lokale Analysen simultan durchgeführt werden können. Indem die globalen Analysen durch das globale Analysemodul auf Basis der Analyseversion des Programmcodes und die lokalen Analysen durch das lokale Analysenmodul auf Basis der aktuellen Versionen des Programmcodes durchgeführt werden, werden Interferenzen der beiden verschiedenen Analysen vermieden, sodass diese unabhängig und individuell durchführbar sind.

Nach einer Ausführungsform umfasst der Übersetzungsschritt ferner:
Übersetzen des Programmcodes in der ersten Programmiersprache in einen Programmcode in einer Hochsprache in einem ersten Teilübersetzungsschritt; und
Übersetzen des Programmcodes in der Hochsprache in den Programmcode in der Binärsprache in einem zweiten Teilübersetzungsschritt.

Hierdurch wird der technische Vorteil erreicht, dass eine möglichst flexible webbasierte Entwicklungsumgebung bereitgestellt werden kann. Durch die Übersetzung des Programmcodes der ersten Programmiersprache in Programmcode einer Hochsprache und das darauf folgende Übersetzen des Programmcodes der Hochsprache in einen entsprechenden Binärcode kann für einen Großteil verschiedener erster Programmiersprachen ein möglichst einfach gestaltetes Übersetzungsmodul mit kompatiblen Backend- und Frontend-Einheiten bereitgestellt werden.

Durch die Einteilung des Übersetzungsmoduls in Backend- und Frontend-Einheiten, von denen die Backend-Einheit eine Übersetzung der Hochsprache in einen Binärcode und die Frontend-Einheit eine Übersetzung der ersten Programmiersprache in die Hochsprache bereitstellt, wird eine einfache Anpassung des Übersetzungsmoduls an verschiedene erste Programmiersprachen bzw. verschiedene Steuerungen des Automatisierungssystems ermöglicht, indem jeweils ausschließlich eine Anpassung der Frontend-Einheit bzw. eine Anpassung der Backend-Einheit vorzunehmen ist. Für eine Hinzunahme einer weiteren ersten Programmiersprache muss somit lediglich eine Frontend-einheit modifiziert werden, die eingerichtet ist, eine Übersetzung der weiteren ersten Programmiersprache in die Hochsprache durchzuführen, während die Backend-Einheit unverändert bleiben kann. Für die Verwendung der webbasierten Entwicklungsumgebung für eine weitere Steuerung mit einer weiteren Prozessoreinheit, muss lediglich die Backend-Einheit auf die Übersetzung der Hochsprache in die von der weiteren Prozessoreinheit verwendeten Binärsprache angepasst werden, während die Frontend-Einheit unverändert verbleiben kann.

Nach einer Ausführungsform ist die erste Programmiersprache eine graphische Programmiersprache.

Hierdurch wird der technische Vorteil erreicht, dass durch die webbasierte Entwicklungsumgebung die Entwicklung eines Programmcodes in einer standardmäßigen Programmiersprache für Automatisierungssysteme, beispielsweise Sequential Function Chart, Ladder Diagram oder Function Block Diagramm ermöglicht ist.

Nach einer Ausführungsform umfasst das Verfahren ferner:
Ausführen eines Debugging-Prozesses des erstellten Programmcodes durch das Übersetzungsmodul in einem Debuggingschritt.

Hierdurch wird der technische Vorteil erreicht, dass der durch die webbasierte Entwicklungsumgebung erstellte Programmcode des Steuerprogramms für das Automatisierungssystem auf Funktionsfähigkeit überprüft werden kann. Im Debuggingprozess kann die Funktionsfähigkeit des erstellten Steuerprogramms getestet werden.

Nach einer Ausführungsform umfasst der Debuggingschritt ferner:
Übersetzen des in der ersten Programmiersprache generierten und in die Programmdatei geschriebenen Programmcodes der ersten Programmiersprache in einen Programmcode der Binärsprache in einem Debuggingübersetzungsschritt;
Übertragen des im Debuggingübersetzungsschritt übersetzten Programmcodes in der Binärsprache von der Arbeitsumgebung an die Steuerung des Automatisierungssystems in einem Debuggingübertragungsschritt;
Ausführen des Programmcodes in der Binärsprache durch die Steuerung des Automatisierungssystems in einem Debuggingausführungsschritt; und
Übertragen von Informationen bezüglich des ausgeführten Programmcodes an die im Webbrowser ausgeführte Instanz des Eingabemoduls des Client-Geräts und/oder an die im weiteren Webbrowser ausgeführte weitere Instanz des Eingabemoduls des weiteren Client-Geräts in einem Debugginginformationsübertragungsschritt.

Hierdurch wird der technische Vorteil erreicht, dass über die im Webbrowser ausgeführte Instanz des Eingabemoduls ein Debuggingprozess des erstellten Programmcodes initiiert werden kann, bei dem die Ausführung des erstellten Programmcodes zur Überprüfung der Funktionsfähigkeit des erstellten Programmcodes durch den Webserver bzw. durch die mit dem Webserver verbundenen Steuerung des Automatisierungssystems bewirkt wird. Der Nutzer kann somit die Funktionsweise des von ihm erstellten Programmcodes problemlos von dem von ihm genutzten Client-Gerät aus initiieren, und benötigt keine direkte Verbindung zur Steuerung des Automatisierungssystems bzw. eine auf dem Client-Gerät installierte Simulationseinrichtung zum Simulieren einer Steuerung eines Automatisierungssystems zum Überprüfen der Funktionsfähigkeit des erstellten Programmcodes.

Zum Durchführen des Debuggingprozesses kann der erstellte Programmcode durch das Übersetzungsmodul in einen entsprechenden Binärcode übersetzt werden, der Binärcode vom Webserver an die Steuerung des Automatisierungssystems übertragen werden und von dieser ausgeführt werden. Informationen, wie beispielsweise Messwerte von Sensoren des Automatisierungssystems oder anderer Speichereinträge der Steuerung, können im Folgenden von der Steuerung über den Webserver an die im jeweiligen Webbrowser ausgeführte Instanz des Eingabemoduls übertragen und von diesem dem Nutzer angezeigt werden, sodass eine Funktionsfähigkeit des erstellten Programmcodes auf Basis des Verhaltens der Steuerung bzw. der durch die Steuerung gesteuerten Komponenten des Automatisierungssystems bestimmbar ist.

Nach einer Ausführungsform umfasst der Debuggingübersetzungsschritt ferner:
Setzen wenigstens eines Breakpoints im Programmcode in einem Breakpointsetzungsschritt; und
Ausführen des Programmcodes in der Binärsprache durch die Steuerung des Automatisierungssystems bis zum Breakpoint im Debuggingausführungsschritt.

Hierdurch wird der technische Vorteil erreicht, dass eine einfache Überprüfung der Funktionsweise des erstellten Programmcodes ermöglicht ist. Durch das Setzen entsprechender Breakpoints durch eine entsprechende Funktion innerhalb der im Webbrowser ausgeführten jeweiligen Instanz des Eingabemoduls kann eine Ausführung des Steuerprogramms durch die Steuerung an gewünschten Stellen des Steuerprogramms unterbrochen werden. Hierdurch ist eine Identifikation eines Fehlers innerhalb des Programmcodes des Steuerprogramms, der zu einer Fehlfunktion des Steuerprogramms führt, erleichtert.

Nach einer Ausführungsform umfasst der Arbeitsumgebungsverbindungsschritt:
Generieren der Arbeitsumgebung auf dem Webserver in einem Arbeitsumgebungsgenerierungsschritt; und
Einrichten des Übersetzungsmoduls in der Arbeitsumgebung in einem Einrichtungsschritt.

Hierdurch wird der technische Vorteil erreicht, dass in Anwendung des im Webbrowser ausgeführten Eingabemoduls ein neues Programmierprojekt gestartet werden kann, indem im Webserver eine entsprechende Arbeitsumgebung mit einem Übersetzungsmodul eingerichtet wird. In der Arbeitsumgebung kann bei Erstellen des jeweiligen Programmcodes des Programmierprojekts eine bzw. eine Mehrzahl von Programmdateien eingerichtet werden. Ein Nutzer kann somit bequem über Ausführung des Eingabemoduls im Webserver eines von ihm verwendeten Client-Geräts ein neues Programmierprojekt starten und den entsprechend erstellten Programmcode innerhalb einer dafür vorgesehenen Arbeitsumgebung auf dem Webserver speichern und bearbeiten. Verschiedene Programmierprojekte können somit individuell in verschiedenen Arbeitsumgebungen hinterlegt und voneinander separiert werden. Hierdurch kann eine Vermischung verschiedener Projekte vermieden werden.

Nach einer Ausführungsform ist auf dem Webserver eine Mehrzahl von einander separierter Arbeitsumgebungen generiert, wobei in jeder Arbeitsumgebung das Übersetzungsmodul ausführbar, und wobei in jeder Arbeitsumgebung ein individuelles Programmierprojekt durchführbar ist.

Hierdurch wird der technische Vorteil erreicht, dass eine saubere Trennung verschiedener Programmierprojekte in individuell ausgestalteten Arbeitsumgebungen auf dem Webserver ermöglicht ist. Die verschiedenen Arbeitsumgebungen können darüber hinaus mit entsprechenden beispielsweise passwortgeschützten Zugängen versehen werden, sodass lediglich autorisierten Nutzern ein Zugriff auf die einzelnen Projekte der Arbeitsumgebungen ermöglicht ist. Hierdurch kann beispielsweise die Funktionalität der webbasierten Entwicklungsumgebung und insbesondere die Rechenleistung des Webservers verschiedenen Nutzern, zum Durchführen entsprechender Programmierprojekte zur Verfügung gestellt werden. Eine Sicherung sensibler Daten auf dem Webserver kann somit gewährleistet werden.

Hierzu kann für das Übersetzungsmodul der auf dem Webserver eingerichteten webbasierten Entwicklungsumgebung eine Mehrzahl von Instanzen des Übersetzungsmoduls erstellt werden. Die verschiedenen Instanzen des Übersetzungsmoduls sind hierbei in den verschiedenen Arbeitsumgebungen ausführbar. Hierdurch können zeitgleich mehrere verschiedene Programmierprojekte bearbeitet werden. Jede der Instanzen des Übersetzungsmoduls kann hierbei ein Analysemodul aufweisen, so dass lokale wie globale Analysen der innerhalb der Programmierumgebungen erstellten Programmcodes durchführbar sind.

Nach einer Ausführungsform ist der Webserver in die Steuerung des Automatisierungssystems integriert.

Hierdurch wird der technische Vorteil erreicht, dass eine möglichst kompakte Einheit zwischen Webserver und Steuerung des Automatisierungssystems bereitgestellt werden kann. Indem der Webserver in die Steuerung des Automatisierungssystems integriert ist, ist eine zusätzliche Datenverarbeitungsanlage zum Betreiben des Webservers nicht nötig.

Nach einer Ausführungsform umfasst die Arbeitsumgebung ferner ein Servicemodul, wobei das Servicemodul eingerichtet ist, rechenaufwändige Vorgänge des im Webbrowser ausgeführten Eingebmoduls auszuführen.

Hierdurch wird der technische Vorteil erreicht, dass rechenaufwändige Vorgänge an den Webserver ausgelagert werden können. Hierdurch können Ressourcen des jeweiligen Client-Geräts eingespart werden. Rechenaufwändige Vorgänge des Eingabemoduls können beispielsweise Layout Algorithmen sein, die bei der Programmierung von graphischen Programmiersprachen zum Erstellen des Programmcodes benötigt werden und entsprechen rechenaufwändig sind.

Nach einem zweiten Aspekt der vorliegenden Erfindung wird ein Automatisierungssystem mit einer Steuerung und einem mit der Steuerung verbundenen Webserver bereitgestellt, wobei der Webserver mit einem Client-Gerät und einem weiteren Client-Gerät verbindbar ist, wobei auf dem Webserver eine Arbeitsumgebung und eine webbasierte Entwicklungsumgebung installiert ist, und wobei das Automatisierungssystem eingerichtet ist, das erfindungsgemäße Verfahren zum Erstellen und Ausführen eines Steuerprogramms zum Steuern eines Automatisierungssystems auszuführen.

Hierdurch wird der technische Vorteil erreicht, dass ein Automatisierungssystem bereitgestellt wird, bei dem ermöglicht ist, dass ein Programmcode eines Steuerprogramms zum Steuern des Automatisierungssystems mittels einer auf einem Webserver installierten webbasierten Entwicklungsumgebung generiert wird.

Die Erfindung ist im Folgenden anhand von Ausführungsbeispielen unter Bezugnahme auf die beigefügten, schematischen und nicht maßstabsgetreuen Zeichnungen näher erläutert. Abschnitte, Elemente, Bauteile, Einheiten, Komponenten und/oder Schemata, welche eine identische oder analoge Ausbildung und/oder Funktion besitzen, sind in der Figurenbeschreibung, der Bezugszeichenliste, den Patentansprüchen und in den Figuren der Zeichnung mit denselben Bezugszeichen gekennzeichnet.

Bei der Erfindung kann ein Merkmal positiv, d. h. vorhanden, oder negativ, d. h. abwesend, ausgestaltet sein, wobei ein negatives Merkmal als Merkmal nicht explizit erläutert ist, wenn nicht nach der Erfindung Wert daraufgelegt ist, dass es abwesend ist, also die tatsächlich gemachte und nicht eine durch den Stand der Technik konstruierte Erfindung darin besteht, dieses Merkmal wegzulassen.

Die Merkmale der Beschreibung sind auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals in einem Ausführungsbeispiel zeigt, dass das Merkmal in Bezug auf die Erfindung optional ist.

In den Figuren zeigen:
Fig. 1 eine schematische Darstellung eines Automatisierungssystems gemäß einer Ausführungsform;
Fig. 2 ein Flussdiagramm eines Verfahrens zum Erstellen und Ausführen eines Steuerprogramms zum Steuern eines Automatisierungssystems gemäß einer Ausführungsform;
Fig. 3 ein weiteres Flussdiagramm des Verfahrens zum Erstellen und Ausführen eines Steuerprogramms zum Steuern eines Automatisierungssystems gemäß einer weiteren Ausführungsform;
Fig. 4 ein weiteres Flussdiagramm des Verfahrens zum Erstellen und Ausführen eines Steuerprogramms zum Steuern eines Automatisierungssystems gemäß einer weiteren Ausführungsform;
Fig. 5 ein zeitliches Ablaufdiagramm einer Datenkommunikation zwischen dem Webserver und den Client-Geräten des Automatisierungssystems in Fig. 1, gemäß einer Ausführungsform;
Fig. 6 ein zeitliches Ablaufdiagramm einer Datenkommunikation zwischen dem Webserver und den Client-Geräten des Automatisierungssystems in Fig. 1, gemäß einer Ausführungsform; und
Fig. 7 ein weiteres Flussdiagramm des Verfahrens zum Erstellen und Ausführen eines Steuerprogramms zum Steuern eines Automatisierungssystems gemäß einer weiteren Ausführungsform;
Fig. 8 ein weiteres Flussdiagramm des Verfahrens zum Erstellen und Ausführen eines Steuerprogramms zum Steuern eines Automatisierungssystems gemäß einer weiteren Ausführungsform; und
Fig. 9 eine weitere schematische Darstellung des Automatisierungssystems in Fig. 1 gemäß einer weiteren Ausführungsform.

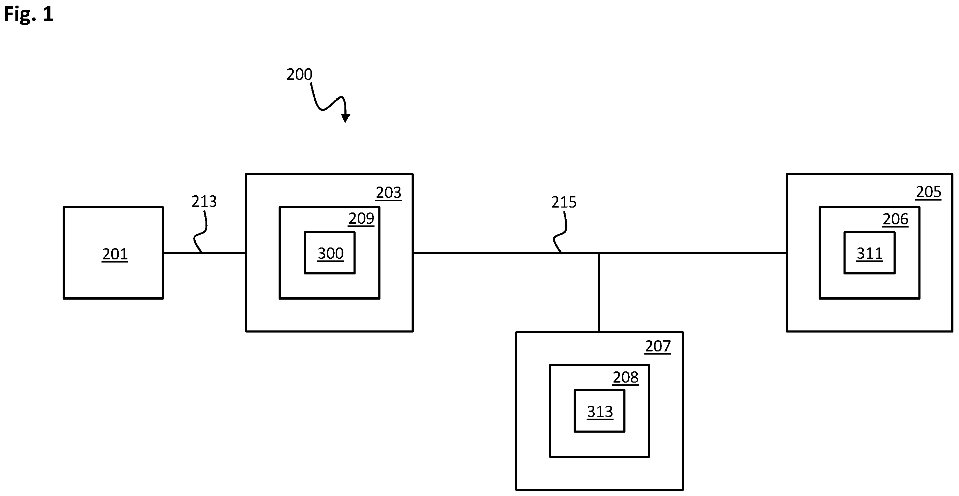

Fig. 1 zeigt eine schematische Darstellung eines Automatisierungssystems 200 gemäß einer Ausführungsform.

Das in Fig. 1 dargestellte Automatisierungssystem 200 umfasst eine Steuerung 201 und einen Webserver 203, der über einen Datenbus 213 mit der Steuerung verbunden ist. Auf dem Webserver 203 ist eine Arbeitsumgebung 209 eingerichtet, in der eine webbasierte Entwicklungsumgebung 300 ausführbar ist, wobei die Entwicklungsumgebung 300 auf dem Webserver 203 installiert ist. In der in Fig. 1 gezeigten Ausführungsform des Automatisierungssystems 200 sind die Steuerung 201 und der Webserver 203 durch zwei individuelle Datenverarbeitungsanlagen realisiert. Alternativ kann der Webserver 203 in die Steuerung 201 integriert sein. Im Übrigen kann über den Datenbus 213 eine Verbindung zum Internet realisiert sein.

In der Ausführungsform in Fig. 1 sind ferner ein Client-Gerät 205 und ein weiteres Client-Gerät 207 über eine Internetverbindung 215 mit dem Webserver 203 verbunden. Auf dem Client-Gerät 205 ist ein Webbrowser 206 installiert, in dem eine Instanz eines Eingabemoduls 311 der webbasierten Entwicklungsumgebung 300 ausgeführt ist.

Auf dem weiteren Client-Gerät 207 ist ein weiterer Webbrowser 208 installiert, in dem eine weitere Instanz des Eingabemoduls 313 ausgeführt ist.

Das Client-Gerät 205 und das weitere Client-Gerät 207 können eine beliebige Datenverarbeitungsanlage, beispielsweise ein Industriecomputer, ein Desktop-Computer, ein Laptop oder ein beliebiges Mobilgerät, beispielsweise ein Mobiltelefon oder Tablet sein. Die Webbrowser 206, 208 können beliebige aus dem Stand der Technik bekannte Webbrowser sein und die Client-Geräte 205, 207 können durch beliebige aus dem Stand der Technik bekannte Betriebssysteme betrieben werden. Alternativ kann ein Webbrowser auch in ein Anwendungsprogramm integriert sein und als Teil des Anwendungsprogramms ausgeführt werden.

Das Automatisierungssystem 200 kann eine beliebige industrielle Automatisierungsanlage sein und die Steuerung 201 kann als eine beliebige Steuerung einer Automatisierungsanlage, insbesondere eine speicherprogrammierbare Steuerung SPS ausgebildet sein.

Alternativ zu der in Fig. 1 gezeigten Ausführungsform kann eine beliebige Anzahl von Client-Geräten über eine Internetverbindung 215 mit dem Webserver 203 verbunden sein. Insbesondere kann das Automatisierungssystem 200 eine beliebige Anzahl von Webservern 203 aufweisen. Darüber hinaus kann auf dem Webserver 203 eine beliebige Anzahl verschiedener Arbeitsumgebungen 209 eingerichtet sein, auf denen jeweils webbasierte Entwicklungsumgebungen 300 ausführbar sind.

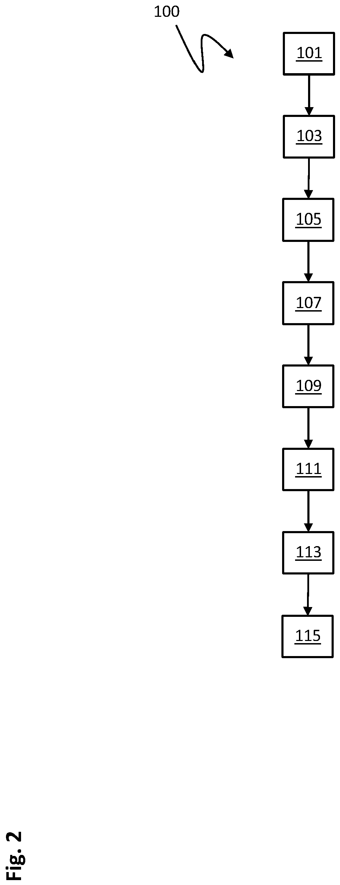

Fig. 2 zeigt ein Flussdiagramm eines Verfahrens 100 zum Erstellen und Ausführen eines Steuerprogramms zum Steuern eines Automatisierungssystems 200 gemäß einer Ausführungsform.

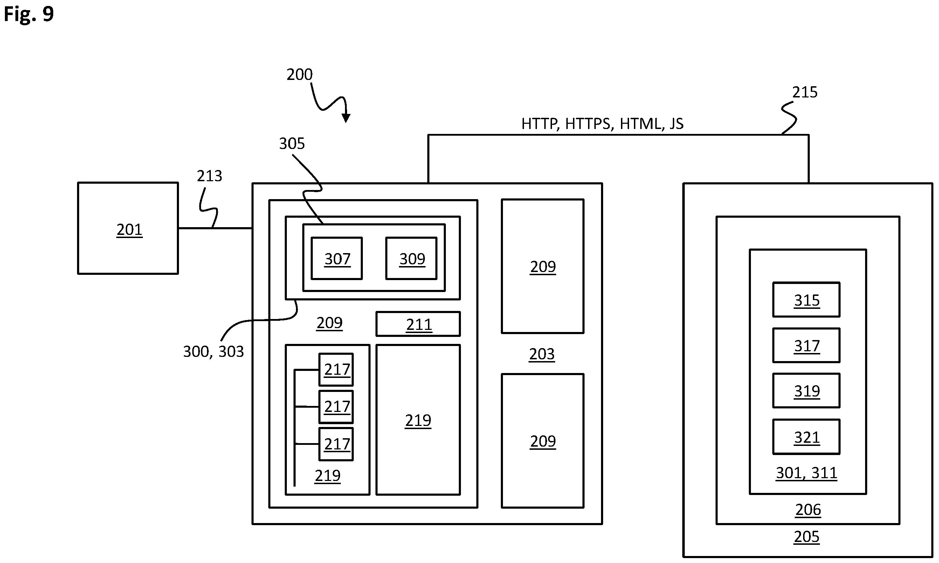

Die Ausführungsform des Verfahrens 100 in Fig. 2 wird mit Bezug auf Fig. 9 und die dazu gehörige Beschreibung beschrieben.

Das Verfahren 100 zum Erstellen und Ausführen eines Steuerprogramms zum Steuern eines Automatisierungssystems 200 kann auf Automatisierungssysteme mit einer Steuerung 201 und einem mit der Steuerung 201 verbundenen Webserver 203 gemäß dem in Fig. 1 dargestellten Automatisierungssystem angewendet werden.

Zum Erstellen eines Steuerprogramms kann sich ein Nutzer über ein von ihm verwendetes Client-Gerät 205, beispielsweise einen Desktop-Computer oder Laptop oder ein beliebiges Mobilgerät, und einen auf dem Client-Gerät 205 ausgeführten Webbrowser 206 über eine Internetverbindung 215 mit dem Webserver 203 in einem Serververbindungsschritt 101 verbinden. Diese Verbindung mit dem Webserver 203 kann beispielsweise einen passwortgeschützten Zugangsprozess umfassen, bei dem der Nutzer sich über einen entsprechend angelegten User-Account einloggen muss.

Nach erfolgreicher Verbindung mit dem Webserver 203, auf dem die webbasierte Entwicklungsumgebung 300 mit einem Eingabemodul 301 und einem Übersetzungsmodul 303 installiert ist, kann der Nutzer in einem Arbeitsumgebungsverbindungsschritt 103 eine Instanz des Eingabemoduls 301 der webbasierten Entwicklungsumgebung 300 laden und im Webbrowser 206 des Client-Geräts 205 ausführen. Die Instanz des Eingabemoduls 311 kann ein entsprechendes Graphical User Interface GUI aufweisen, das dem Nutzer Eingabemöglichkeiten, wie beispielsweise Texteditoren, bereitstellt. Die Instanz des Eingabemoduls 311 kann vergleichbar zu aus dem Stand der Technik bekannten Integrierten Entwicklungsumgebungen (Integrated Development Environments IDE) aufgebaut sein.

Über das Graphical User Interface GUI der im Webbrowser 206 ausgeführten Instanz des Eingabemoduls 311 kann der Nutzer im Arbeitsumgebungsverbindungsschritt 103 eine Verbindung zu einer Arbeitsumgebung 209 auf dem Webserver 201 erstellen. Die auf dem Webserver 201 eingerichtete Arbeitsumgebung 209 kann ein entsprechendes Programmierprojekt inklusive einer Programmdatei umfassen, in der ein zu modifizierender Programmcode des Steuerprogramms angeordnet ist. Alternativ kann der Nutzer über die im Webbrowser 206 ausgeführte Instanz des Eingabemoduls 300 in der Arbeitsumgebung 209 ein neues Programmierprojekt einrichten und einen neuen Programmcode erstellen.

Ein Programmierprojekt kann neben der den Programmcode enthaltenden Programmdatei beliebige weitere Dateien aufweisen, in denen beliebige zum Ausführen des Programmiervorgangs benötigte Informationen gespeichert sind. Darüber hinaus kann das Programmierprojekt Dokumentationen des Programmcodes oder Code zum Steuern des Übersetzungsvorgangs umfassen. Die einzelnen Dateien können in entsprechenden Verzeichnissen geordnet sein. Darüber hinaus kann ein Programmierprojekt über verschiedene Datenbanken verfügen, die für die Erstellung eines Programmcodes in einer entsprechende Programmiersprache benötigt werden und beispielsweise verwendbare Dateitypen, Funktionen und andere Objekte der jeweiligen Programmiersprache umfassen. Die Datenbanken können insbesondere automatisch mit Inhalt befüllt werden. Dies ist insbesondere bei der Durchführung von Analysen des erstellten Programmcodes der Fall, bei der Analyseergebnisse in den Datenbanken gespeichert beziehungsweise zwischengespeichert werden.

Hierzu kann der Nutzer in einem Codeerstellungsschritt 105 durch entsprechende Eingaben in die im Webbrowser 206 ausgeführte Instanz des Eingabemoduls 311 eine erste Version des zu erstellenden Programmcodes für ein Steuerprogramm für das Automatisierungssystem 200 in einer ersten Programmiersprache erstellen. Hierzu kann über verschiedene Texteditoren oder Grapheditoren des Eingabemoduls 301 innerhalb des durch das Client-Gerät 205 ausgeführten Webbrowsers 206 in einer ersten Programmiersprache ein entsprechender Programmcode erstellt werden.

Die verwendete erste Programmiersprache kann eine beliebige aus dem Stand der Technik bekannte textbasierte oder grafische Programmiersprache sein. Alternativ kann die erste Programmiersprache eine aus dem Stand der Technik bekannte für Automatisierungssysteme verwendete Programmiersprache wie beispielsweise Sequential Function Chart SFC, Ladder Diagram LD oder Function Block Diagram FBD sein.

Alternativ kann die erste Programmiersprache eine beliebige aus dem Stand der Technik bekannte textbasierte oder grafische Programmiersprache sein.

Die erste Version des Programmcodes kann ein neu erstellter Programmcode sein. Alternativ kann die erste Version des Programmcodes eine geänderte Version eines bereits erstellten Programmcodes sein, der auf dem Webserver 203 innerhalb der Arbeitsumgebung 209 unter dem entsprechenden Programmierprojekt abgelegt ist. Hierzu kann der bereits erstellte Programmcode zunächst vom Webserver 203 auf die im Webbrowser 206 des Client-Geräts 205 ausgeführte Instanz des Eingabemoduls 311 geladen werden.

Nach Erstellen der ersten Version des Programmcodes im Codeerstellungsschritt 105 kann in einem Programmcodeübertragungsschritt 107 die erstellte erste Version des Programmcodes von der im Webbrowser 206 ausgeführten Instanz des Eingabemoduls 311 über die Internetverbindung 215 an den Webserver 203 übertragen werden. Die Übertragung des erstellten Programmcodes von der im Webbrowser 206 ausgeführten Instanz des Eingabemoduls 311 an den Webserver 203 kann automatisch durchgeführt werden, indem die im Webbrowser 206 ausgeführte Instanz des Eingabemoduls 311 in vorbestimmten Zeitabständen entsprechende Nachrichten an den Webserver 203 übermittelt.

Alternativ können im Programmcodeübertragungsschritt 107 ausschließlich die im Codeerstellungsschritt 105 vorgenommenen Änderungen am Programmcode, auf deren Basis die erste Version des Programmcodes erstellt wurde, von der im Webbrowser 206 ausgeführten Instanz des Eingabemoduls 311 über die Internetverbindung 215 an den Webserver 203 übertragen werden. Dies ist insbesondere von Interesse, wenn die erste Version des Programmcodes eine geänderte Version eines bereits erstellten Programmcodes darstellt.

Alternativ kann der Nutzer über eine entsprechende Sendefunktion den von ihm erstellten Programmcode von der im Webbrowser 206 ausgeführten Instanz des Eingabemoduls 311 an den Webserver 203 übermitteln.

Nach erfolgreicher Übertragung des erstellten Programmcodes an den Webserver 203 kann in einem Schreibschritt 109 der übertragende Programmcode in eine Programmdatei innerhalb der Arbeitsumgebung geschrieben werden. Die Programmdatei der Arbeitsumgebung kann hierbei im Zuge eines neu erstellten Programmierprojekts erstellt worden sein. Alternativ kann die Programmdatei Teil eines bereits bestehenden Programmierprojekts sein, während die erstellte erste Version des Programmcodes eine Modifikation eines bereits bestehenden Programmcodes darstellt.

Die Programmdatei kann vergleichbar zu einem Puffer als eine Datei in einem Hauptspeicher des Webservers 203 ausgebildet sein, sodass Änderungen der Programmdatei nicht automatisch in einem dauerhaften Datenspeicher, wie einer Festplatte, des Webservers 203 gespeichert werden müssen.

Darüber hinaus kann die Programmdatei mit einer Assoziationsdatei im dauerhaften Datenspeicher des Webservers 203 assoziiert sein, in der die Inhalte der Programmdatei gespeichert werden können, so dass eine Speicherung der Inhalte der Programmdatei im dauerhaften Speicher des Webservers 203 erreicht werden kann.

Alternativ kann die Programdatei im Schreibschritt 109 auf dem dauerhaften Datenspeicher des Webservers 203 gespeichert werden.

Eine Programmdatei kann beispielsweise als ein Verbundtyp aufgebaut sein und wiederum weitere Dateikomponenten umfassen, die beispielsweise Teile eines umfassenden Steuerprogramms beinhalten. Der erstellte Programmcode kann ein vollständiges Steuerprogramm umfassen. Alternativ kann der erstellte Programmcode einen Teil eines komplexen Steuerprogramms darstellen.

In einem Übersetzungsschritt 111 kann im Folgenden das Übersetzungsmodul 303 der webbasierten Entwicklungsumgebung 300, das in der Arbeitsumgebung 209 ausführbar ist, ausgeführt werden und der in die Programmdatei geschriebene Programmcode, der in der ersten Programmiersprache verfasst ist, in einen entsprechenden Binärcode einer Binärsprache beziehungsweise einer Maschinensprache übersetzt werden. Der durch die Übersetzung durch das Übersetzungsmodul 303 generierte Binärcode ist auf die Ausbildung der Steuerung 201 des Automatisierungssystems angepasst, sodass der übersetzte Binärcode durch die Steuerung 201 ausführbar ist.

Nach Übersetzen des erstellten Programmcodes im Übersetzungsschritt 111 kann in einem Binärcodeübertragungsschritt 113 der erzeugte Binärcode von der Arbeitsumgebung 209 an die Steuerung 201 des Automatisierungssystems 200 übertragen werden. Dies kann beispielsweise über einen entsprechende Datenbus 213 erreicht werden. Der Datenbus 213 kann beispielsweise als eine lokale Netzwerkverbindung ausgebildet sein.

Nach Übertragung des Binärcodes an die Steuerung 201 kann dieser in einem Ausführungsschritt 115 durch die Steuerung 201 ausgeführt werden und das Automatisierungssystem 200 gemäß dem erstellten Steuerprogramm gesteuert werden.

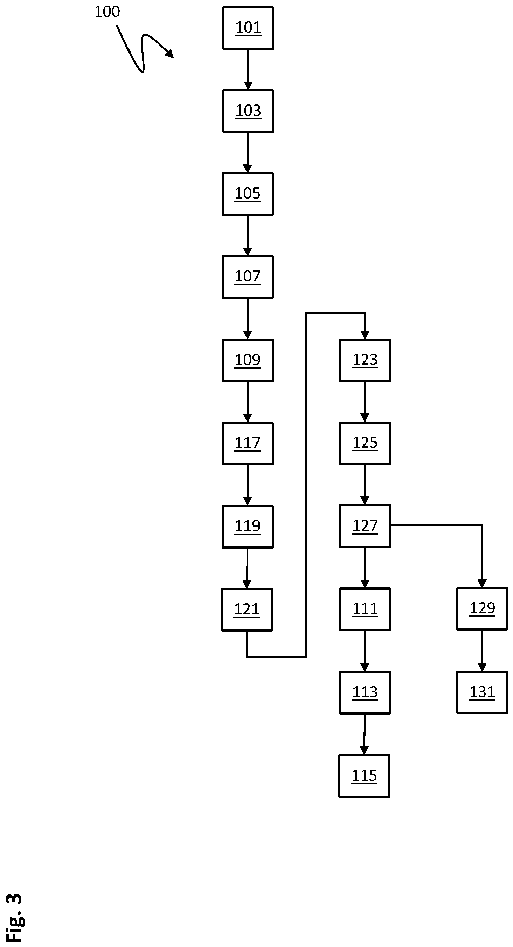

Fig. 3 zeigt ein weiteres Flussdiagramm des Verfahrens 100 zum Erstellen und Ausführen eines Steuerprogramms zum Steuern eines Automatisierungssystems 200 gemäß einer weiteren Ausführungsform.

Die Ausführungsform des Verfahrens 100 in Fig. 3 basiert auf der Ausführungsform in Fig. 2 und umfasst alle Verfahrensschritte der Ausführungsform in Fig. 2. Sofern diese in der Ausführungsform in Fig. 3 unverändert bleiben, wird von einer erneuten detaillierten Beschreibung abgesehen.

Abweichend zu der Ausführungsform in Fig. 2 beschreibt die Ausführungsform in Fig. 3 das Erstellen eines Programmcodes durch zwei Nutzer, die über individuelle Client-Geräte beispielsweise das Client-Gerät 205 und das weitere Client-Gerät 207 gemäß Fig. 1 simultan den Programmcode des Steuerprogramms erstellen.

Hierzu kann in einem weiteren Serververbindungsschritt 117 eine Verbindung zwischen dem weiteren Client-Gerät 207 und dem Webserver 203 über einen weiteren Webbrowser 208 erstellt werden. Die Verbindung zwischen dem weiteren Client-Gerät 207 und dem Webserver 203 kann wiederum einen passwortgeschützten Zugangsprozess umfassen, bei dem der weitere Nutzer sich über einen entsprechenden individuellen User-Account beim Server einloggen muss.

Darauf folgend kann der weitere Nutzer über den weiteren Webbrowser 208 des weiteren Client-Geräts 207 eine weitere Instanz des Eingabemoduls 313 der auf dem Webserver 203 installierten webbasierten Entwicklungsumgebung 300 laden und in einem weiteren Arbeitsumgebungsverbindungsschritt 119 im weiteren Webbrowser 208 des weiteren Client-Geräts 207 ausführen. Die weitere Instanz des Eingabemoduls 313 kann analog zur Instanz des Eingabemoduls 311 ein grafisches User Interface GUI aufweisen, das innerhalb des weiteren Webbrowsers 208 dem Nutzer entsprechende Eingabemöglichkeiten zum Erstellen des Programmcodes bereitstellt. Die beiden Instanzen des Eingabemoduls 311, 313 können in unterschiedlichen Webbrowsern und in unterschiedlichen Client-Geräten, die mit verschiedenen Betriebssystemen betrieben werden, ausgeführt werden. So kann das Client-Gerät 205 beispielsweise ein Desktop-Computer sein, während das weitere Client-Gerät 207 ein Mobilgerät ist.

Darauffolgend kann über die weitere Instanz des Eingabemoduls 313 eine Verbindung zur Arbeitsumgebung 209 des Webservers 203 aufgebaut werden. Diese kann wiederum einen passwortgeschützten Zugangsprozess umfassen.

Darauffolgend kann in einem weiteren Programmcodeübertragungsschritt 121 die in die Programmdatei geschriebene erste Version des Programmcodes vom Webserver 203 an die weitere Instanz des Eingabemoduls 313 übertragen und in dieser angezeigt werden. Der weitere Nutzer kann somit die vom ersten Nutzer bearbeitete Version des Programmcodes bearbeiten.

Darauffolgend können in einem Änderungserstellungsschritt 123 Änderungen an der ersten Version des Programmcodes vorgenommen und eine zweite Version des Programmcodes erstellt werden. Hierzu kann der Nutzer über entsprechende Eingaben an der weiteren Instanz des Eingabemoduls 313 den von der Arbeitsumgebung 209 des Webservers 203 heruntergeladenen Programmcode entsprechend modifizieren. Hierzu kann der Nutzer die im Eingabemodul 301 bereitgestellten Editoren verwenden, über die Programmcode der entsprechenden Programmiersprache erstellt werden kann.

Darauffolgend kann die zweite Version des Programmcodes in einem ersten Änderungsübertragungsschritt 125 von der weiteren Instanz des Eingabemoduls 313 an den Webserver 203 und insbesondere an die Arbeitsumgebung 209 übertragen werden. Im ersten Änderungsübertragungsschritt 125 kann die zweite Version des Programmcodes insbesondere dadurch übertragen werden, dass ausschließlich die vorgenommenen Änderungen im Programmcode übertragen werden. Hierzu kann jede einzelne vorgenommene Änderung in einer individuellen Nachricht von der weiteren Instanz des Eingabemoduls 313 an den Webserver 203 übertragen werden.

Nach Übertragung der zweiten Version des Programmcodes bzw. der vorgenommenen Änderungen an die Arbeitsumgebung 209 des Webservers 203 kann die zweite Version des Programmcodes in einem Änderungsschreibschritt 127 in die Programmdatei der Arbeitsumgebung 209 geschrieben werden. Hierzu können insbesondere lediglich die vorgenommenen Änderungen in die erste Version des Programmcodes eingepflegt werden.

Nach Schreiben der zweiten Version des Programmcodes in die Programmdatei kann in einem zweiten Änderungsübertragungsschritt 129 die in die Programmdatei geschriebene Version von der Arbeitsumgebung 209 an die im Webbrowser 206 ausgeführte Instanz des Eingabemoduls 311 des Client-Geräts 205 übertragen werden und in einem Änderungsanzeigeschritt 131 dem Nutzer des Client-Geräts 205 die durch den weiteren Nutzer des weiteren Client-Geräts 207 erstellte zweite Version des Programmcodes und insbesondere die vorgenommenen Änderungen des Programmcodes in der jeweiligen Instanz des Eingabemoduls 311 angezeigt werden. Durch diesen Abgleich können beide Nutzer mit der gleichen Version des Programmcodes arbeiten, sodass eine simultane Bearbeitung des Programmcodes durch eine Mehrzahl von Nutzern ermöglicht ist.

Die Übertragung der in die Programmdatei geschriebenen Version des Programmcodes im Änderungsübertragungsschritt 129 kann automatisch durchgeführt werden, indem der Webserver 203 automatisch nach dem Schreiben der Version des Programmcodes in die Programmdatei die Version des Programmcodes an die Instanz des Eingabemoduls 311 des Client-Geräts 205 überträgt. Alternativ kann die Übertragung der Version des Programmcodes vom Webserver 203 an die Client-Geräte 205, 207 als Antwortnachrichten auf entsprechende Anfragen der Client-Geräte 205, 207 beziehungsweise der Instanzen des Eingabemoduls 311, 313 an den Webserver 203 erfolgen, in denen die Client-Geräte 205, 207 beziehungsweise der Instanzen des Eingabemoduls 311, 313 anfragen, ob aktuelle Versionen des Programmcodes vorliegen.

Nach Schreiben der zweiten Version in die Programmdatei im Änderungsschreibschritt 127 kann analog zu der Ausführungsform in Fig. 2 die in die Programmdatei geschriebene Version des Programmcodes im Übersetzungsschritt 111 durch das Übersetzungsmodul 303 in einen entsprechenden Binärcode übersetzt werden, der in dem Binärcodeübertragungsschritt 113 an die Steuerung 201 übertragen und im Ausführungsschritt 115 durch die Steuerung ausgeführt werden kann.

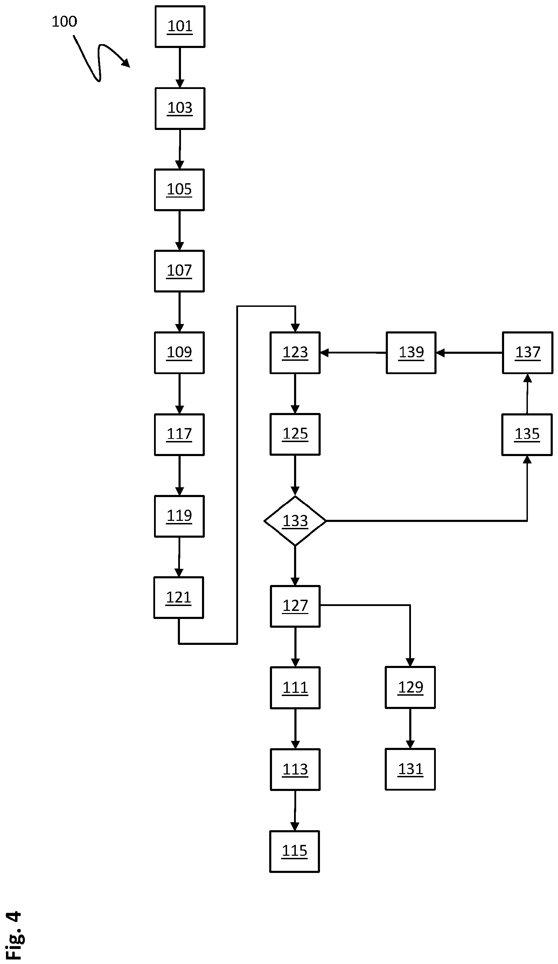

Fig. 4 zeigt ein weiteres Flussdiagramm des Verfahrens 100 zum Erstellen und Ausführen eines Steuerprogramms zum Steuern eines Automatisierungssystems 200 gemäß einer weiteren Ausführungsform.

Die Ausführungsform in Fig. 4 basiert auf der Ausführungsform in Fig. 3 und umfasst alle dort beschriebenen Verfahrensschritte. Sofern diese in der Ausführungsform in Fig. 4 unverändert bleiben, wird von einer erneuten detaillierten Beschreibung abgesehen.

Abweichend zu der Ausführungsform in Fig. 3 können in der Ausführungsform in Fig. 4 im Änderungsübertragungsschritt 125 neben den Änderungen, die an der ersten Version des Programmcodes vorgenommen wurden, zusätzlich die erste Version beziehungsweise eine Information bezüglich der ersten Version des Programmcodes, beispielsweise eine Versionsnummer, an den Webserver 203 übertragen werden.

Darauf folgend kann in einem Vergleichsschritt 133 die in dem Änderungsübertragungsschritt 125 übertragene erste Version beziehungsweise die Information bezüglich der ersten Version des Programmcodes, auf Basis derer die zweite Version des Programmcodes durch die Vornahme der entsprechenden Änderungen erstellt wurde, mit der Version verglichen werden, die in die Programmdatei geschrieben ist und in der Arbeitsumgebung 209 auf dem Webserver 203 gespeichert ist. Beispielsweise können die Versionsnummern der ersten Version und der in die Programmdatei geschriebenen Version des Programmcodes verglichen werden.

Wird im Vergleichsschritt 133 erkannt, dass die in die Programmdatei geschriebene Version des Programmcodes mit der im ersten Änderungsübertragungsschritt 125 übertragenen Version des Programmcodes übereinstimmt, beispielsweise bei übereinstimmenden Versionsnummern, können die im ersten Änderungsübertragungsschritt 125 übertragenen Änderungen im Änderungsschreibschritt 127 in die Programmdatei geschrieben bzw. in die jeweilige Version des Programmcodes eingepflegt werden.

Wird im Vergleichsschritt 133 hingegen erkannt, dass keine Übereinstimmung zwischen der Version des Programmcodes der Programmdatei und der im ersten Änderungsübertragungsschritt 125 übertragenen Version des Programmcodes besteht, beispielsweise durch eine fehlende Übereinstimmung der Versionsnummern, so wird in einem Fehlermeldungsschritt 135 ein Synchronisationsfehler ermittelt. Der Synchronisationsfehler besagt, dass während der Bearbeitung der ersten Version des Programmcodes durch den weiteren Nutzer in der weiteren Instanz des Eingabemoduls 313 die in der Programmdatei gespeicherte Version des Programmcodes aktualisiert und somit verändert wurde. Dies kann vorkommen, wenn mehrere Nutzer zeitgleich Änderungen am Programmcode vornehmen und diese in der Programmdatei gespeichert werden. Durch die Ermittlung des Synchronisationsfehlers im Fehlerermittlungsschritt 135 kann somit vermieden werden, dass verschiedene Nutzer auf unterschiedlichen Versionen des Programmcodes arbeiten und diese unabhängig voneinander modifizieren.

Nach Ermittlung des Synchronisationsfehlers kann in einem Versionsübertragungsschritt 137 die in die Programmdatei geschriebene Version vom Webserver 203 an die weitere Instanz des Eingabemoduls 313 übermittelt werden.

In einem Versionsanzeigeschritt 139 kann diese übertragene Version des Programmcodes, die zum Zeitpunkt der Übertragung in die Programmdatei geschrieben ist, in der weiteren Instanz des Eingabemoduls 313 auf dem weiteren Client-Gerät 207 dem weiteren Nutzer angezeigt werden. Hierdurch kann dem weiteren Nutzer gezeigt werden, dass während der weitere Nutzer Änderungen an der ersten Version des Programmcodes vorgenommen hat, um eine zweite Version des Programmcodes zu erstellen, diese erste Version des Programmcodes bereits durch einen anderen Nutzer durch Hinzufügen weiterer Änderungen modifiziert wurde. Durch das Anzeigen der Version des Programmcodes der Programmdatei im Versionsanzeigeschritt 139 kann dem weiteren Nutzer somit die derzeitige Version des Programmcodes inklusive der darin durch den anderen Nutzer vorgenommenen Änderungen angezeigt werden.

Auf Basis der im Versionsanzeigeschritt 139 angezeigten Version des Programmcodes kann der weitere Nutzer durch entsprechende Eingaben in die weitere Instanz des Eingabemoduls 313 im Änderungserstellungsschritt 123 weitere Änderungen vornehmen und eine weitere Version des Programmcodes erstellen. Hierdurch wird eine Synchronisation des zu bearbeitenden Programmcodes für verschiedene Nutzer ermöglicht, sodass gewährleistet ist, dass die verschiedenen Nutzer zeitgleich eine identische Version des Programmcodes bearbeiten können. Darüber hinaus werden allen Nutzern, die zeitgleich den gleichen Programmcode bearbeiten, alle vorgenommenen Änderungen angezeigt.

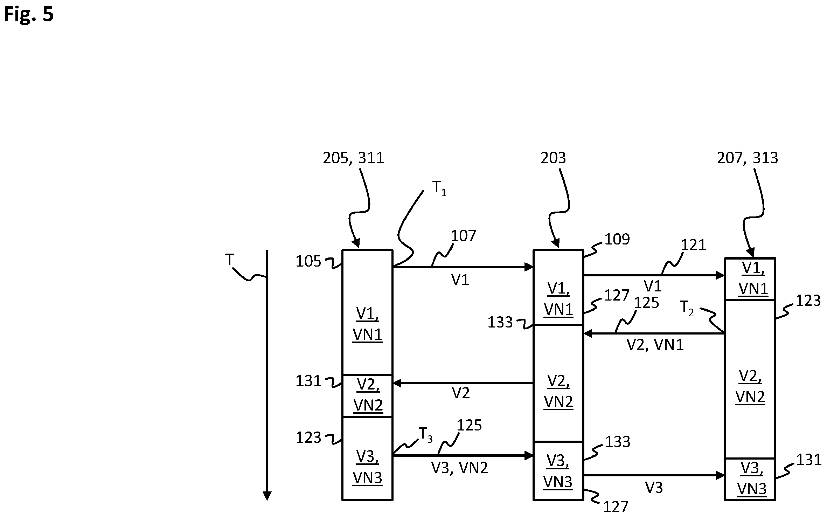

Fig. 5 zeigt ein zeitliches Ablaufdiagramm einer Datenkommunikation zwischen dem Webserver 201 und den Client-Geräten 205, 207 des Automatisierungssystems 200 in Fig. 1, gemäß einer Ausführungsform.

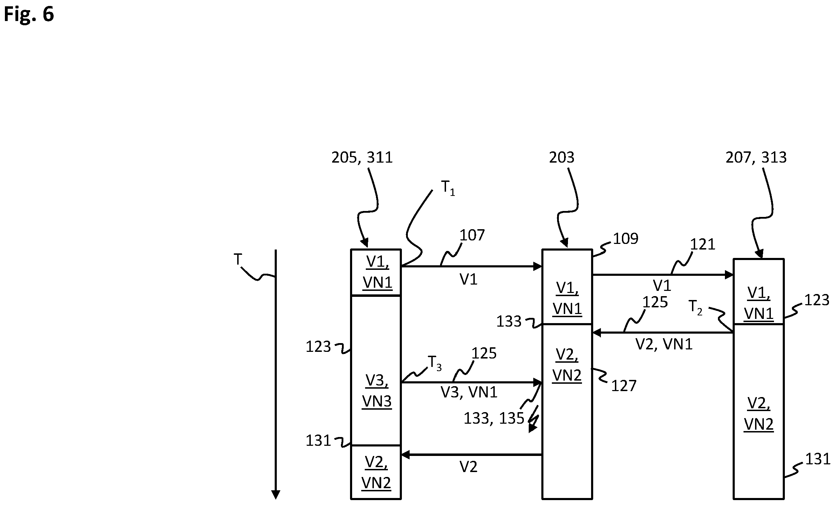

Die Figuren 5 und 6 zeigen jeweils einen zeitlichen Ablauf des zur Fig. 4 beschriebenen Synchronisationsprozesses der durch mehrere Nutzer bearbeiteten Versionen des zu erstellenden Programmcodes.

In Fig. 5 und 6 werden jeweils in den rechten und linken Spalten die lokalen Zustände der in den jeweiligen Instanzen des Eingabemoduls 311, 313 der beiden Client-Geräte 205, 207 angezeigten Versionen des Programmcodes dargestellt. Die mittlere Spalte stellt einen zeitlichen Ablauf des Zustands des Webservers 203 dar und beschreibt den zeitlichen Ablauf der in der Programmdatei gespeicherten Versionen des Programmcodes.

In Fig. 5 bearbeitet ein erster Nutzer am Client-Gerät 205 unter Verwendung der im Webbrowser 206 ausgeführten Instanz des Eingabemoduls 311 zunächst den zu erstellenden Programmcode und erstellt eine erste Version des Programmcodes V1 des zu erstellenden Programmcodes.

Nach Erstellen der ersten Version des Programmcodes V1 durch den ersten Nutzer in der Instanz des Eingabemoduls 311 wird die erste Version des Programmcodes V1 zu einem ersten Zeitpunkt T1 im Programmcodeübertragungsschritt 107 an den Webserver 203 übertragen. Im Webserver 203 wird die übertragene erste Version des Programmcodes V1 im Schreibschritt 109 in die Programmdatei der Arbeitsumgebung 209 geschrieben. Der lokale Zustand des Webservers 203 ist somit durch die in die Programmdatei geschriebene erste Version des Programmcodes V1 definiert. Im Programmcodeübertragungsschritt 121 überträgt der Webserver 203 die in die Programmdatei geschriebene erste Version des Programmcodes V1 an den weiteren Nutzer des weiteren Client-Geräts 207.

Der weitere Nutzer bearbeitet die erste Version des Programmcodes V1 und erstellt eine zweite Version des Programmcodes V2 in der im weiteren Webbrowser 208 ausgeführten weiteren Instanz des Eingabemoduls 313. Zu einem zweiten Zeitpunkt T2 überträgt die weitere Instanz des Eingabemoduls 313 die erstellte zweite Version des Programmcodes V2 im Änderungsübertragungsschritt 125 an den Webserver 203. Im Änderungsübertragungsschritt 125 wird zusätzlich zu den vorgenommenen Änderungen die Versionsnummer der ersten Version des Programmcodes VN1 übertragen.

Darauffolgend wird im Vergleichsschritt 133 die übertragene Versionsnummer der ersten Version des Programmcodes VN1 mit der Versionsnummer der in die Programmdatei geschriebene Version des Programmcodes verglichen. In dem in Fig. 5 gezeigten Beispiel entspricht zum Zeitpunkt des Empfangens der übertragenen Änderungen durch den Webserver 203 die übertragene Versionsnummer der ersten Version des Programmcodes VN1 der Versionsnummer der in die Programmdatei geschriebenen Version des Programmcodes. Nach Durchführung des Vergleichsschritts 133 werden somit die Änderungen der zweiten Version des Programmcodes V2 in die Programmdatei geschrieben, sodass der lokale Zustand des Webservers 203 die in die Programmdatei geschriebene zweite Version des Programmcodes umfasst ist.

Darauffolgend wird die zweite Version des Programmcodes V2 bzw. die vorgenommenen Änderungen, vom Webserver 203 an das erste Client-Gerät 205 bzw. die im Webbrowser 206 ausgeführte Instanz des Eingabemoduls 311 übertragen.

Im Änderungsanzeigeschritt 131 werden die übertragenen Änderungen der zweiten Version des Programmcodes in der Instanz des Eingabemoduls 311 angezeigt, sodass zu diesem Zeitpunkt der lokale Zustand des Client-Geräts 205 durch die in der Instanz des Eingabemoduls 311 angezeigten zweiten Version des Programmcodes V2 definiert ist.

Darauffolgend modifiziert der Nutzer des Client-Geräts 205 die zweite Version des Programmcodes V2 durch das Vornehmen von Änderungen und erstellt eine dritte Version des Programmcodes V3 im Änderungserstellungsschritt 123. Der lokale Zustand des Client-Geräts 205 ist zu diesem Zeitpunkt somit durch die in der Instanz des Eingabemoduls 311 angezeigten dritten Version des Programmcodes V3 definiert.

Zu einem dritten Zeitpunkt T3 überträgt die Instanz des Eingabemoduls 311 des Client-Geräts 205 die dritte Version des Programmcodes V3, insbesondere die Änderungen, die an der zweiten Version des Programmcodes V2 vorgenommen wurden, inklusive der Versionsnummer der zweiten Version des Programmcodes VN2, die als Basis der dritten Version des Programmcodes V3 diente, an den Webserver 203. Dieser führt wiederum den Vergleichsschritt 133 aus und vergleicht die übertragene Versionsnummer der zweiten Version des Programmcodes VN2 mit der Versionsnummer der in die Programmdatei geschriebenen Versionen des Programmcodes.

In dem in Fig. 5 dargestellten Beispiel entspricht die übertragene Versionsnummer zweite Version des Programmcodes VN2 der Versionsnummer der in die Programmdatei geschriebenen Version des Programmcodes, sodass die Änderungen übernommen werden und die dritte Version des Programmcodes V3 im Änderungsschreibschritt 127 in die Programmdatei geschrieben wird. Der lokale Zustand des Webservers 203 ist somit durch die in die Programmdatei geschriebene dritte Version des Programmcodes V3 definiert.

Darauffolgend überträgt der Webserver 203 die dritte Version des Programmcodes V3 an die weitere Instanz des Eingabemoduls 313 des weiteren Client-Geräts 207. Im Änderungsanzeigeschritt 131 zeigt die weitere Instanz des Eingabemoduls 313 im Folgenden die dritte Version des Programmcodes V3 an, sodass der lokale Zustand des weiteren Client-Geräts 207, nachdem dieser auf die dritte Version geändert wurde, durch die angezeigte dritte Version des Programmcodes V3 definiert ist.

Fig. 6 zeigt zeitliches Ablaufdiagramm einer Datenkommunikation zwischen dem Webserver 201 und den Client-Geräten 205, 207 des Automatisierungssystems 200 in Fig. 1, gemäß einer Ausführungsform.

In Fig. 6 ist ein weiteres Beispiel des Synchronisationsprozesses dargestellt. Abweichend zu Fig. 5 tritt in dem Beispiel in Fig. 6 ein Synchronisationsfehler auf.

Analog zu dem Beispiel in Fig. 5 bearbeitet der erste Nutzer in der Instanz des Eingabemoduls 311 zunächst den Programmcode und erstellt eine erste Version des Programmcodes V1.

Zum Zeitpunkt T1 wird diese an den Server 203 übertragen, der die erste Version des Programmcodes V1 in die Programmdatei schreibt und an den weiteren Nutzer bzw. die weitere Instanz des Eingabemoduls 313 des weiteren Client-Geräts überträgt.

Die weitere Instanz des Eingabemoduls 313 zeigt die erste Version des Programmcodes V1 an und der weitere Nutzer des weiteren Client-Geräts 207 bearbeitet die erste Version des Programmcodes V1 und erstellt eine zweite Version des Programmcodes V2.

Zum Zeitpunkt T2 werden die Änderungen der zweiten Version des Programmcodes V2 inklusive der Versionsnummer der ersten Version des Programmcodes VN1 an den Webserver 203 übertragen. Nach Durchführung des Vergleichsschritts 133 schreibt der Programmserver 203 die zweite Version des Programmcodes V2 in die Programmdatei.

Abweichend zu dem Beispiel in Fig. 5 bearbeitet in dem Beispiel in Fig. 6 der erste Nutzer des Client-Geräts 205 zeitgleich zu der Bearbeitung der ersten Version des Programmcodes V1 durch den zweiten Nutzer die erste Version des Programmcodes V1, die zu diesem Zeitpunkt den lokalen Zustand des Client-Geräts 205 definiert und erstellt eine dritte Version des Programmcodes V3.

Zu einem dritten Zeitpunkt T3 überträgt die Instanz des Eingabemoduls 311 die dritte Version des Programmcodes V3 inklusive der Versionsnummer der ersten Version des Programmcodes VN1, auf der die dritte Version des Programmcodes V3 basiert, an den Webserver 203.

Im Vergleichsschritt 133 vergleicht der Webserver 203 die übertragene Versionsnummer der ersten Version des Programmcodes VN1 mit der Versionsnummer der in die Programmdatei geschriebenen Version des Programmcodes. Da zu diesem Zeitpunkt die Version der Programmdatei und somit der lokale Zustand des Webservers 203 durch die zweite Version des Programmcodes V2 definiert und somit die übertragene Versionsnummer der ersten Version des Programmcodes VN1 nicht mit Versionsnummer der Version der Programmdatei übereinstimmt, die der Versionsnummer der zweiten Version des Programmcodes VN2 entspricht, wird im Fehlerermittlungsschritt 135 ein Synchronisationsfehler ermittelt.

Darauffolgend wird die übertragene dritte Version des Programmcodes nicht in die Programmdatei geschrieben. Stattdessen wird die zu diesem Zeitpunkt in die Programmdatei geschriebene zweite Version des Programmcodes V2 vom Webserver 203 an die Instanz des Eingabemoduls 311 des Client-Geräts 205 des ersten Nutzers übertragen.

Im Änderungsanzeigeschritt 131 wird darauffolgend die zweite Version des Programmcodes V2 in der Instanz des Eingabemoduls 311 des Client-Geräts 205 angezeigt. Dem Nutzer des Client-Geräts 205 sind somit die vom weiteren Nutzer des weiteren Client-Geräts 207 zwischenzeitlich erstellten Änderungen der zweiten Version des Programmcodes V2 dargestellt, sodass eine Synchronisation der jeweils verwendeten Versionen des Programmcodes beziehungsweise der Zustände auf den Client-Geräten 205, 207 der unterschiedlichen Nutzer wiederhergestellt ist.

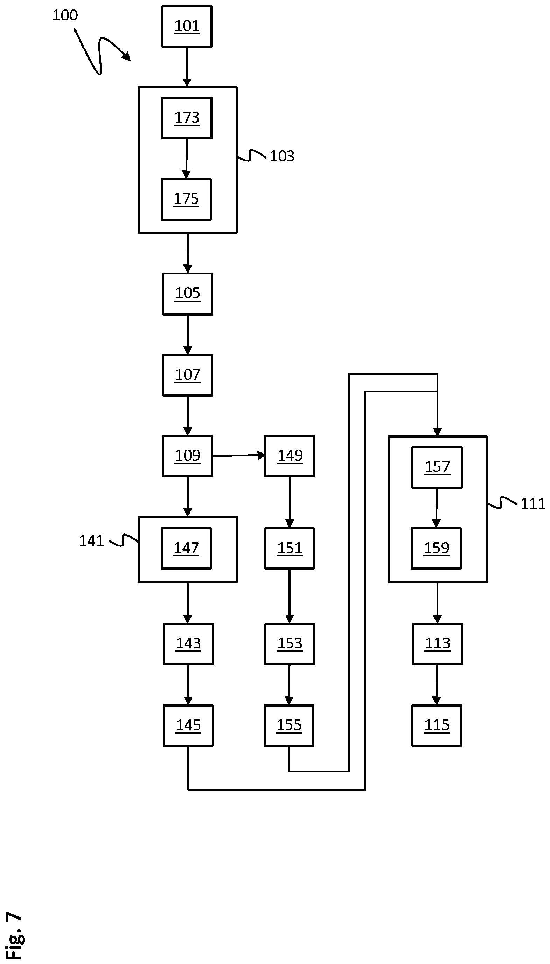

Fig. 7 zeigt ein weiteres Flussdiagramm des Verfahrens 100 zum Erstellen und Ausführen eines Steuerprogramms zum Steuern eines Automatisierungssystems 200 gemäß einer weiteren Ausführungsform.

Die Ausführungsform des Verfahrens 100 in Fig. 7 basiert auf der Ausführungsform in Fig. 2 und umfasst alle dort beschriebenen Verfahrensschritte. Sofern diese in der Ausführungsform in Fig. 7 unverändert bleiben, wird von einer erneuten detaillierten Beschreibung abgesehen.

Abweichend zu der Ausführungsform in Fig. 2 umfasst in der Ausführungsform in Fig. 7 der Arbeitsumgebungsverbindungsschritt 103 einen Arbeitsumgebungsgenerierungsschritt 173. Im Arbeitsumgebungsgenerierungsschritt 173 kann der mit dem Webserver 203 verbundene Nutzer über den auf dem Client-Gerät 205 ausgeführten Webbrowser 206 eine Arbeitsumgebung 209 auf dem Webserver 203 generieren.

Der Nutzer kann hierzu ein neues Programmierprojekt erzeugen und dieses in der neu erstellten Arbeitsumgebung 209 anordnen. Die erstellte Arbeitsumgebung 209 kann ferner mit einem passwortgeschützten Zugangsprozess versehen werden, mittels dem gesichert werden kann, dass ausschließlich autorisierte Nutzer Zugang zu der Arbeitsumgebung 209 und dem darin angelegten Programmprojekt erhalten.

Darauffolgend kann in einem Einrichtungsschritt 175 in der neu generierten Arbeitsumgebung 209 das Übersetzungsmodul 301 der webbasierten Entwicklungsumgebung 300 eingerichtet werden. Hierdurch ist das in der neu generierten Arbeitsumgebung angelegte Programmierprojekt über die webbasierte Entwicklungsumgebung 300 ausführbar.

Alternativ kann eine Instanz des auf dem Webserver 203 eingerichteten Übersetzungsmoduls 301 erzeugt werden, die in der Arbeitsumgebung 209 ausführbar ist. Für den Fall, dass auf dem Webserver 203 eine Mehrzahl von Arbeitsumgebungen 209 eingerichtet ist, kann für jede Arbeitsumgebung 209 eine individuelle Instanz des Übersetzungsmoduls 301 erzeugt werden, die jeweils ausschließlich in der jeweiligen Arbeitsumgebung 209 ausführbar ist. Die Mehrzahl von Instanzen des Übersetzungsmoduls 301 können zeitgleich ausgeführt werden. So können auf dem Webserver 203 zeitgleich verschiedenen Programmierprojekte bearbeitet werden.

Nach erfolgreicher Verbindung mit der Arbeitsumgebung im Arbeitsumgebungsverbindungsschritt 103 kann der Nutzer über die im Webbrowser 206 ausgeführte Instanz des Eingabemoduls 311 den gewünschten Programmcode im Codeerstellungsschritt 105 erstellen.

Abweichend zu der Ausführungsform in Fig. 2 ermöglicht die Ausführungsform in Fig. 7 die Durchführung globaler Analysen und lokaler Analysen des erstellten Programmcodes, die simultan oder zeitversetzt durchgeführt werden können.

Hierzu umfasst das Übersetzungsmodul 301 der webbasierten Entwicklungsumgebung 300 ein Analysemodul, das eingerichtet ist, semantische und syntaktische Analysen des erstellten Programmcodes durchzuführen. Die durchgeführten semantischen und syntaktischen Analysen basieren hierbei auf der Semantik und Grammatik der jeweils zum Erstellen des Programmcodes verwendeten Programmiersprache. Für den Fall, dass für jede Arbeitsumgebung 209 des Webservers 203 eine Instanz des Übersetzungsmoduls 301 generiert ist, umfasst jede dieser Instanzen eine Instanz des Analysemoduls, die innerhalb des jeweiligen Instanz des Übersetzungsmoduls 301 innerhalb der jeweiligen Arbeitsumgebung 209 ausführbar ist.

Nach Übertragung des erstellten Programmcodes im Programmcodeübertragungsschritt 107 von der Instanz des Eingabemoduls 300 an den Webserver 203 und dem Schreiben des übertragenen Programmcodes in die Programmdatei im Schreibschritt 109 kann somit in einem globalen Analyseschritt 141 eine globale Analyse des übertragenen Programmcodes vom Analysemodul durchgeführt werden. Eine globale Analyse berücksichtigt hierbei den vollständigen erstellten Programmcode und umfasst insbesondere eine lexikalische Analyse des Programmcodes wie auch eine Analyse der im Programmcode verwendeten Semantik und Grammatik.

Hierzu kann der globale Analyseschritt 141 einen Schnappschussschritt 147 umfassen, in dem eine Analyseversion des erstellten Programmcodes generiert werden kann. Hierzu kann eine Kopie des Programmcodes erstellt werden. Die globale Analyse wird im Folgenden auf Basis der erstellten Analyseversion des Programmcodes durchgeführt. Da die globale Analyse den vollständigen erstellten Programmcode umfasst, kann diese zeitaufwändig sein. Indem eine für die globale Analyse zu verwendende Analyseversion des Programmcodes erstellt wird, die von weiteren Änderungen des in die Programmdatei geschriebenen Programmcodes unberührt bleibt, kann gewährleistet werden, dass zeitgleich zur Durchführung der globalen Analyse weitere Änderungen am Programmcode durch den Nutzer durchgeführt werden können, ohne dass der Programmierprozess des Nutzers durch die Durchführung der globalen Analyse blockiert bzw. die Ergebnisse der globalen Analyse durch simultane Änderungen des Programmcodes korrumpiert werden.

Nach Erstellen der Analyseversion des Programmcodes und Durchführen der globalen Analyse auf Basis der Analyseversion des Programmcodes können die generierten Ergebnisse der globalen Analyse in einem globalen Analyseergebnisübertragungsschritt 143 vom Webserver 203 an die im Webbrowser 206 des Client-Geräts 205 ausgeführte Instanz des Eingabemoduls 311 übertragen werden.

In einem globalen Analyseergebnisanzeigeschritt 145 können die Ergebnisse der globalen Analyse in der im Webbrowser 206 ausgeführten Instanz des Eingabemoduls 311 angezeigt werden.

Die Ergebnisse der globalen Analyse können hierbei Fehlermeldungen von syntaktischen bzw. semantischen Fehlern im erstellten Programmcode umfassen. Ferner können die Ergebnisse der globalen Analyse die im Programmcode verwendeten Variablen, Funktionen, Datentypen, Namensräume oder andere Objekte der verwendeten Programmiersprache umfassen, die in entsprechenden Listen bzw. Anzeigefenstern in der Instanz des Eingabemoduls 311 angezeigt werden können.

Zeitgleich oder zeitversetzt zur globalen Analyse kann eine lokale Analyse des erstellten Programmcodes durchgeführt werden. Hierzu kann in einem Aktualisierungsschritt 149 eine aktuelle Version des Programmcodes erstellt werden. Insbesondere kann für jede durchgeführte Änderung eine aktuelle Version des Programmcodes erstellt werden, in der die durchgeführte Änderung erfasst ist.

Im Unterschied zur globalen Analyse, in der primär die semantische und syntaktische Richtigkeit des erstellten Programmcodes bzw. die im Programmcode verwendeten Objekte überprüft bzw. identifiziert werden sollen, dient die lokale Analyse dazu, dem Nutzer Eingabehilfen wie beispielsweise eine Autovervollständigung bzw. das Einfärben von Codestellen bzw. das Hervorheben von relevanten Sonderzeichen oder Schlüsselwörtern des erstellten Programmcodes dient. Die lokale Analyse wird somit auf den aktuellen Versionen des Programmcodes durchgeführt, die jeweils nach Durchführung einer Änderung des Programmcodes erstellt werden. Darüber hinaus können über die globale Analyse Programmobjekte des Programmcodes identifiziert und zugreifbar gespeichert werden. Hierzu können beispielsweise entsprechende Datenbanken erzeugt werden.

Hierzu kann im lokalen Analyseschritt 151 auf jeder erstellten aktuellen Version des Programmcodes eine lokale Analyse eines Teils des erstellten Programmcodes durchgeführt werden. Die lokale Analyse berücksichtigt lediglich Teile des Programmcodes, die beispielsweise dazu benötigt werden, eine automatische Vervollständigung des geschriebenen Programmcodes zu ermöglichen. Für jede erstellte aktuelle Version des Programmcodes kann somit eine individuelle lokale Analyse im lokalen Analyseschritt 151 durchgeführt werden. Nach Abschluss der lokalen Analyse können die ermittelten lokalen Analyseergebnisse in einem lokalen Analyseergebnisübertragungsschritt 153 an die Instanz des Eingabemoduls 311 übermittelt werden.

In einem lokalen Analyseergebnisanzeigeschritt 155 werden die übertragenen lokalen Analyseergebnisse in der Instanz des Eingabemoduls 311 angezeigt. Diese können beispielsweise durch eine Vervollständigung des geschriebenen Programmcodes bzw. eine grafische Hervorhebung von einzelnen relevanten Teilen des Programmcodes als Eingabehilfe für den Nutzer angezeigt werden.

Im Programmcodeübertragungsschritt 107 kann jede durchgeführte Modifikation des erstellten Programmcodes in einer individuellen Nachricht an den Webserver 203 übermittelt werden. Somit kann im Aktualisierungsschritt 149 für jede übertragene Änderung eine aktuelle Version des Programmcodes erstellt werden und eine individuelle lokale Analyse im lokalen Analyseschritt 151 auf Basis dieser aktuellen Version des Programmcodes durchgeführt werden.

Eine Änderung des erstellten Programmcodes kann hierbei aus dem Hinzufügen oder Löschen eines einzelnen Zeichens des Programmcodes bestehen.

Das Analysemodul des Übersetzungsmoduls kann ferner eine globale Analysekomponente und eine lokale Analysekomponente umfassen. Die globale Analysekomponente kann hierbei eingerichtet sein, die globale Analyse durchzuführen, während die lokale Analysekomponente eingerichtet sein kann, die lokale Analyse durchzuführen. Durch die Durchführung der globalen Analyse durch die globale Analysekomponente und der lokalen Analyse durch die lokale Analysekomponente können beide Analysen zeitgleich durchgeführt werden, ohne dass eine gegenseitige Beeinflussung stattfindet.

Die Übertragung der globalen Analyseergebnisse im globalen Analyseergebnisübertragungsschritt 143 kann als Antwort auf entsprechende Poll-Abfragen durch die Instanz des Eingabemoduls 311 an den Webserver 203 ausgebildet sein. Die Übertragung der lokalen Analyseergebnis im lokalen Analyseergebnisübertragungsschritt 153 können als Push-Nachrichten durch den Webserver 203 an die Instanz des Eingabemoduls 311 ausgebildet sein.

Alternativ kann der Webserver 203 mittels Push-Nachrichten den Clients beziehungsweise den Instanzen des Eingabemoduls 311 mitteilen, dass aktuelle Analyseergebnisse vorliegen. Mittels entsprechender Poll-Nachrichten können die Clients beziehungsweise Instanzen des Eingabemoduls 311 die aktuellen Analyseergebnisse vom Webserver 203 abfragen.

Alternativ kann über entsprechende Poll-Nachrichten von den Clients an den Webserver 203 entsprechende lokale Analysen durch das lokale Analysemodul 309 angestoßen werden. Das lokale Analysemodul 309 führt hierauf die lokalen Analysen durch und der Webserver 203 sendet die entsprechenden lokalen Analyseergebnisse an die Clients beziehungsweise die Instanzen des Eingabemoduls 311, die die entsprechenden lokalen Analysen angefordert haben.

Die in der Ausführungsform in Fig. 7 beschriebene Durchführung der globalen Analyse und der lokalen Analyse kann analog auf die Erstellung von Änderungen des Programmcodes im Änderungserstellungsschritt 123 durch weitere Nutzer gemäß den Ausführungsformen in Fig. 3 und Fig. 4 übertragen werden. Globale und lokale Analysen können somit für alle Nutzer durchgeführt werden, die an der Erstellung bzw. Änderung des Programmcodes teilnehmen.

Nach Durchführung der globalen Analyse bzw. der lokalen Analyse kann der in die Programmdatei geschriebene Programmcode im Übersetzungsschritt 111 übersetzt werden. Vor der Übersetzung des Programmcodes im Übersetzungsschritt 111 können mehrere globale und lokale Analysen des erstellten Programmcodes durchgeführt werden. Insbesondere können mehrere Änderungen bzw. Modifikationen der in die Programmdatei geschriebenen Version des Programmcodes vorgenommen werden.

In der Ausführungsform in Fig. 7 umfasst die Übersetzung im Übersetzungsschritt 111 einen ersten Teilübersetzungsschritt 157 und einen zweiten Teilübersetzungsschritt 159. Im ersten Teilübersetzungsschritt 157 kann der in der ersten Programmiersprache erstellte Programmcode in eine Hochsprache übersetzt werden. Die Hochsprache kann beispielsweise ein C++-Code sein. Alternativ kann die Hochsprache eine beliebige aus dem Stand der Technik bekannte textuelle Hochsprache sein.

Im zweiten Teilübersetzungsschritt 159 kann der in die Hochsprache übersetzte Programmcode in einen entsprechenden Binärcode übersetzt werden, der durch die Steuerung 201 des Automatisierungssystems 200 ausführbar ist.

Zur Durchführung des ersten Teilübersetzungsschritts 157 und des zweiten Teilübersetzungsschritts 159 kann das Übersetzungsmodul eine Frontend-Komponente und eine Backend-Komponente umfassen. Die Frontend-Komponente kann hierbei eingerichtet sein, den Programmcode der ersten Programmiersprachen in einen entsprechenden Programmcode der Hochsprache zu übersetzen. Die Backend-Komponente kann eingerichtet sein, den erstellten Programmcode der Hochsprache in einen entsprechenden Binärcode zu übersetzen.

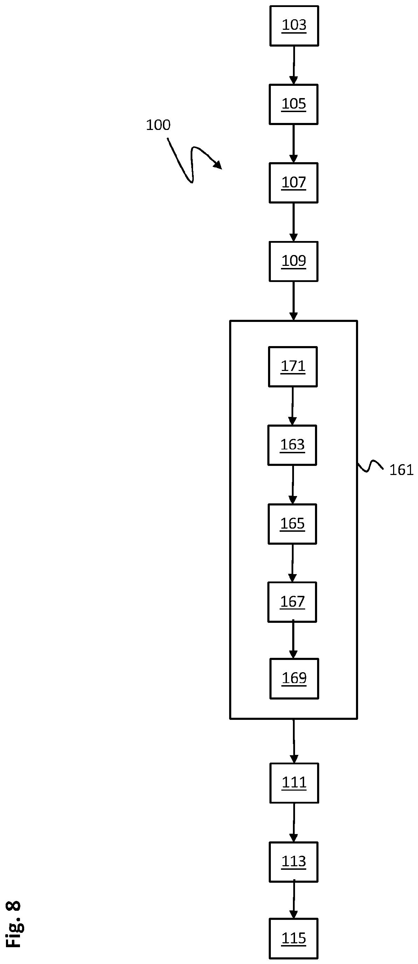

Fig. 8 zeigt ein weiteres Flussdiagramm des Verfahrens 100 zum Erstellen und Ausführen eines Steuerprogramms zum Steuern eines Automatisierungssystems 200 gemäß einer weiteren Ausführungsform.

Die Ausführungsform in Fig. 8 basiert auf der Ausführungsform in Fig. 2 und umfasst alle dort beschriebenen Verfahrensschritte. Die in der Ausführungsform in Fig. 8 unveränderten Verfahrensschritte werden im Folgenden nicht erneut detailliert beschrieben werden.

In der Ausführungsform in Fig. 8 kann nach dem Schreiben des erstellten Programmcodes in die Programmdatei im Schreibschritt 109 in einem Debuggingschritt 161 ein Debuggingprozess durchgeführt werden, in dem die Funktionsfähigkeit des erstellten Programmcodes getestet wird.

Hierzu umfasst der Debuggingschritt 161 einen Debuggingübersetzungsschritt 163, in dem der in die Programmdatei eingeschriebene Programmcode in einen entsprechenden Binärcode durch das Übersetzungsmodul übersetzt wird.

Darauffolgend kann der im Debuggingübersetzungsschritt 163 generierte Binärcode an die Steuerung 201 des Automatisierungssystems in einen Debuggingübertragungsschritt 165 übertragen werden.

Darauffolgend kann der an die Steuerung 201 übertragene Binärcode des erstellten Programmcodes in einem Debuggingausführungsschritt 167 ausgeführt werden. Während der Ausführung des Binärcodes des Steuerprogramms durch die Steuerung 201 können verschiedene Steuerungsparameter protokolliert werden, die eine Aussage bezüglich der Funktionsfähigkeit des Steuerprogramms zum Steuern des Automatisierungssystems 200 ermöglichen.

In einem folgenden Debugginginformationsübertragungsschritt 169 können die im Debuggingausführungsschritt 167 protokollierten Steuerungsparameter als Information an die im Webbrowser 206 ausgeführte Instanz des Eingabemoduls übertragen werden. Hierzu kann zunächst die Information von der das Steuerprogramm ausführenden Steuerung 201 an den Webserver 203 übertragen werden. Die übertragenen Informationen bzw. Steuerungsparameter können in der Instanz des Eingabemoduls 311 dem Nutzer angezeigt werden, sodass eine Überprüfung der Funktionsfähigkeit des erstellten Programmcodes ermöglicht ist. Darüber hinaus kann der Debuggingschritt 161 einen Breakpointsetzungsschritt 171 umfassen, in dem der erstellte Programmcode mit entsprechenden Breakpoints versehen werden kann, die ermöglichen, eine Ausführung des Programmcodes im Debuggingausführungsschritt 167 an einer durch den gesetzten Breakpoints markierten Stelle des Programmcodes anzuhalten.

Der Debuggingschritt 161 kann durch den Nutzer durch eine entsprechende Eingabe in das Eingabemodul 303 initiiert werden.

Der Debuggingsausführungsschritt 167 kann durch die Steuerung 201 des Automatisierungssystems durchgeführt werden. Alternativ kann auf dem Webserver 203 ein Simulationsmodul installiert sein, das eingerichtet ist, den Debuggingausführungsschritt 167 auszuführen und eine Steuerung des Automatisierungssystems 200 auf Basis des erstellten Programmcodes zu simulieren.

Der Debuggingvorgang im Debuggingschritt 161 kann gemäß einem aus dem üblichen Stand der Technik bekannten Debuggingprozess ausgeführt werden, bei dem die Funktionsfähigkeit des erstellten Programmcodes überprüfbar ist.

Das erfindungsgemäße Verfahren 100 kann auf eine beliebige Anzahl verschiedener Nutzer, die über unterschiedliche Client-Geräte mit dem Webserver 203 verbunden sind, angewendet werden. Jeder der Nutzer ist über eine im Webbrowser des verwendeten Client-Geräts ausgeführte Instanz des Eingabemoduls in der Lage, einen Programmcode für ein Steuerprogramm für ein Automatisierungssystem zu erstellen. Über die Synchronisationsfunktionen kann gewährleistet werden, dass alle Nutzer, die zeitgleich einen gemeinsamen Programmcode erstellen bzw. bearbeiten oder Informationen darüber anzeigen, auf der identischen Version des Programmcodes arbeiten können, und die durch die jeweils anderen Nutzer vorgenommenen Änderungen am Programmcode angezeigt bekommen. Hierdurch ist eine direkte Zusammenarbeit ermöglicht, bei der im gegenseitigen Austausch gemeinsam ein Programmcode für ein Steuerprogramm eines Automatisierungssystems generiert werden kann. Die Rechenoperationen zum Erstellen des Programmcodes bzw. zum Übersetzen des Programmcodes in einen Binärcode wie auch zum Durchführen der einzelnen Analysen oder eines Debuggingprozesses können hierbei über den Webserver 203 ausgeführt werden.

Gemäß einer Ausführungsform kann ein Client beziehungsweise ein weiterer Client ein beliebiges Anwendungsprogramm sein, das sich über die definierte Schnittstelle mit dem Server verbindet und Informationen vom Server bezieht und auf diesen überträgt. Ein Client oder ein weiterer Client kann darüber hinaus eine andere Rolle als die einer Intelligent Development Environment IDE einnehmen.

Fig. 9 zeigt eine weitere schematische Darstellung des Automatisierungssystems 200 in Fig. 1 gemäß einer weiteren Ausführungsform.

In der Ausführungsform in Fig. 9 umfasst das Automatisierungssystem 200 eine Steuerung 201, die über einen Datenbus 213 mit einem Webserver 203 verbunden ist. Ferner ist ein Client-Gerät 205 über eine Internetverbindung 215 mit dem Webserver 203 verbunden.

Auf dem Webserver 203 sind drei verschiedene Arbeitsumgebungen 209 eingerichtet. In einer Arbeitsumgebung 209 ist eine Instanz der auf dem Webserver installierten webbasierten Entwicklungsumgebung 300 mit einem Übersetzungsmodul 303 eingerichtet. Das Übersetzungsmodul 303 umfasst ein Analysemodul 305. Das Analysemodul 305 umfasst ein globales Analysemodul 307 und ein lokales Analysemodul 309. Das Analysemodul 305 ist eingerichtet, eine Analyse des erstellten Programmcodes durchzuführen. Das globale Analysemodul 307 ist eingerichtet, eine globale Analyse gemäß dem globalen Analyseschritt 141 durchzuführen. Das lokale Analysemodul 309 ist eingerichtet, eine lokale Analyse des erstellten Programmcodes gemäß dem lokalen Analyseschritt 151 durchzuführen.

In der Ausführungsform in Fig. 9 ist in der Arbeitsumgebung 209 ferner ein Servicemodul 211 eingerichtet. Das Servicemodul 211 ist ausgebildet, rechenaufwändige Algorithmen zu übernehmen. Das Servicemodul 211 kann beispielsweise eingerichtet sein, Layoutalgorithmen durchzuführen, die bei der Programmierung einer grafischen Programmiersprache vorgenommen werden. Durch das Servicemodul 211 können somit rechenaufwändige Prozessschritte, die während des Programmierens des Programmcodes auftreten, auf den Webserver 203 ausgelagert werden, um Ressourcen des Client-Geräts 205 zu schonen.

Darüber hinaus sind in der Arbeitsumgebung 209 zwei unabhängige Programmierprojekte 219 eingerichtet. Einem Programmierprojekt 219 sind hierbei in einer Datenstruktur angeordnete Programmdateien 217 zugeordnet, die innerhalb des Programmierprojekts 219 bearbeitet und in die entsprechende Programmcodes geschrieben werden können.

Alternativ zu der in Fig. 9 gezeigten beispielhaften Ausführungsform kann auf dem Webserver 203 eine beliebige Anzahl verschiedener individueller Arbeitsumgebungen 209 eingerichtet sein. Ferner kann in jeder Arbeitsumgebung eine beliebige Anzahl verschiedener Programmierprojekte 219 eingerichtet sein, denen eine beliebigen Anzahl verschiedener Programmdateien 217 zugeordnet sein können.

Das Client-Gerät 205 umfasst einen Webbrowser 206, in dem eine Instanz des Eingabemoduls 311 der webbasierten Entwicklungsumgebung 300 ausgeführt wird. Die Instanz des Eingabemoduls 311 weist in der Ausführungsform in Fig. 9 einen Texteditor 315, einen Editor für die Programmiersprache Sequential Function Chart SFC 317, einen Editor für die Programmierspracher Ladder Diagram LD 319 und einen Editor für die Programmiersprache Function Block Diagram FBD 321 auf. Die in Fig. 9 dargestellte Ausführungsform des Eingabemoduls 301 ist lediglich beispielhaft. Alternativ kann das Eingabemodul 301 weitere Funktionen, Editoren und andere Komponenten aufweisen, die für eine aus dem Stand der Technik bekannte Integrated Development Environment DIE üblich sind.

Eine Datenkommunikation zwischen dem Client-Gerät 205 und dem Webserver 203 kann über ein HTTP-Protokoll oder ein HTTPS-Protokoll realisiert werden. Insbesondere können Versionen des Programmcodes zwischen dem Webserver 203 und dem Client-Gerät 205 über das HTTP-Protokoll oder das HTTPS-Protokoll ausgetauscht werden. Weitere Kommunikation zwischen dem Webserver 203 und dem Client-Gerät 205 kann über einen Web-Socket-Kanal durchgeführt werden.

### Bezugszeichenliste

- 100: Verfahren zum Generieren und Ausführen eines Steuerprogramms
- 101: Serververbindungsschritt
- 103: Arbeitsumgebungsverbindungsschritt
- 105: Codeerstellungsschritt
- 107: Programmcodeübertragungsschritt
- 109: Schreibschritt
- 111: Übersetzungsschritt
- 113: Binärcodeübertragungsschritt
- 115: Ausführungsschritt
- 117: Serververbindungsschritt
- 119: weiterer Arbeitsumgebungsverbindungsschritt
- 121: weiterer Programmcodeübertragungsschritt
- 123: Änderungserstellungsschritt
- 125: Änderungsübertragungsschritt
- 127: Änderungsschreibschritt
- 129: zweiter Änderungsübertragungsschritt
- 131: Änderungsanzeigeschritt
- 133: Vergleichsschritt
- 135: Fehlerermittlungsschritt
- 137: Versionsübertragungsschritt
- 139: Versionsanzeigeschritt
- 141: globaler Analyseschritt
- 143: globaler Analyseergebnisübertragungsschritt
- 145: globaler Analyseergebnisanzeigeschritt
- 147: Schnappschussschritt
- 149: Aktualisierungsschritt
- 151: lokaler Analyseschritt
- 153: lokaler Analyseergebnisübertragungsschritt
- 155: lokaler Analyseergebnisanzeigeschritt
- 157: erster Teilübersetzungsschritt
- 159: zweiter Teilübersetzungsschritt
- 161: Debuggingschritt
- 163: Debuggingübersetzungsschritt
- 165: Debuggingübertragungsschritt
- 167: Debuggingausführungsschritt
- 169: Debugginginformationsübertragungsschritt
- 171: Breakpointsetzungsschritt
- 173: Arbeitsumgebungsgenerierungsschritt
- 175: Einrichtungsschritt

- 200: Automatisierungssystem
- 201: Steuerung
- 203: Webserver
- 205: Client-Gerät
- 206: Webbrowser
- 207: weiteres Client-Gerät
- 208: weiterer Webbrowser
- 209: Arbeitsumgebung
- 211: Servicemodul
- 213: Datenbus
- 215: Internetverbindung
- 217: Programmdatei
- 219: Programmierprojekt

- 300: webbasierte Entwicklungsumgebung
- 301: Eingabemodul
- 303: Übersetzungsmodul
- 305: Analysemodul
- 307: globales Analysenmodul
- 309: lokales Analysenmodul
- 311: Instanz des Eingabemoduls
- 313: weitere Instanz des Eingabemoduls
- 315: Texteditor
- 317: Editor für Sequential Function Chart (SFC)
- 319: Editor für Ladder Diagram (LA)
- 321: Editor für Function Block Diagram (FBD)

- V1: erste Version des Programmcodes
- V2: zweite Version des Programmcodes
- V3: dritte Version des Programmcodes
- VN1: Versionsnummer der ersten Version des Programmcodes
- VN2: Versionsnummer der zweiten Version des Programmcodes
- VN3: Versionsnummer der dritten Version des Programmcodes

- T1: erster Zeitpunkt
- T2: zweiter Zeitpunkt
- T3: dritter Zeitpunkt

## Patentansprüche

1. Verfahren (100) zum Erstellen und Ausführen eines Steuerprogramms zum Steuern eines Automatisierungssystems (200) mit einer Steuerung (201) und einem mit der Steuerung (201) verbundenen Webserver (203), umfassend:
Erstellen einer Verbindung zwischen einem Client-Gerät (205) und dem Webserver (203) über einen auf dem Client-Gerät (205) ausgeführten Webbrowser (206) in einem Serververbindungsschritt (101), wobei auf dem Webserver (203) eine webbasierte Entwicklungsumgebung (300) mit einem Eingabemodul (301) zum Erstellen eines Programmcodes und einem Übersetzungsmodul (303) zum Übersetzen des erstellten Programmcodes installiert ist, wobei das Eingabemodul in dem Webbrowser (206) ausführbar ist, und wobei das Übersetzungsmodul (303) eingerichtet ist, einen Programmcode einer ersten Programmiersprache in einen Programmcode einer Binärsprache zu übersetzen;
Ausführen einer Instanz des Eingabemoduls (311) im Webbrowser (206) durch das Client-Gerät (205) und Erstellen einer Verbindung des Client-Geräts (205) mit einer Arbeitsumgebung (209) des Webservers (203) und dem Übersetzungsmodul (303) der Arbeitsumgebung (209) über die im Webbrowser (206) ausgeführte Instanz des Eingabemoduls (311) in einem Arbeitsumgebungsverbindungsschritt (103), wobei innerhalb der Arbeitsumgebung das Übersetzungsmodul (303) ausführbar ist;
Erstellen einer ersten Version eines Programmcodes (V1) eines Steuerprogramms für das Automatisierungssystem (200) in der ersten Programmiersprache in der im Webbrowser (206) ausgeführten Instanz des Eingabemoduls (311) in einem Codeerstellungsschritt (105);
Übertragen der erstellten ersten Version des Programmcodes (V1) von der im Webbrowser (206) ausgeführten Instanz des Eingabemoduls (311) an die Arbeitsumgebung (209) des Webservers (203) in einem Programmcodeübertragungsschritt (107);
Schreiben der ersten Version des Programmcodes (V1) in eine Programmdatei (217) in der Arbeitsumgebung (209) in einem Schreibschritt (109), wobei die Programmdatei (217) in einem Hauptspeicher des Webservers (203) gespeichert ist, wobei die Programmdatei (217) eine mit der Programmdatei assoziierte und in einem dauerhaften Speicher des Webservers (203) gespeicherte Assoziationsdatei umfasst, und wobei die in die Programmdatei (217) geschriebene erste Version des Programmcodes (V1) in der Assoziationsdatei speicherbar ist;
Erstellen einer weiteren Verbindung zwischen einem weiteren Client-Gerät (207) und dem Webserver (203) über einen auf dem weiteren Client-Gerät (207) ausgeführten weiteren Webbrowser (208) in einem weiteren Serververbindungsschritt (117);
Ausführen einer weiteren Instanz des Eingabemoduls (313) im weiteren Webbrowser (208) des weiteren Client-Geräts (207) und Erstellen einer weiteren Verbindung des weiteren Client-Geräts (207) mit der Arbeitsumgebung (209) des Webservers (203) über die im weiteren Webbrowser (208) ausgeführte weitere Instanz des Eingabemoduls (313) in einem weiteren Arbeitsumgebungsverbindungsschritt (119);
Übertragen der in die Programmdatei (217) geschriebenen ersten Version des Programmcodes (V1) an die im weiteren Webbrowser (208) des weiteren Client-Geräts (207) ausgeführte weitere Instanz des Eingabemoduls (313) in einem weiteren Programmcodeübertragungsschritt (121);
Vornehmen von Änderungen an der ersten Version des Programmcodes (V1) und Erstellen einer zweiten Version des Programmcodes (V2) in der ersten Programmiersprache in der im weiteren Webbrowser (208) des weiteren Client-Geräts (207) ausgeführten weiteren Instanz des Eingabemoduls (313) in einem Änderungserstellungsschritt (123);
Übertragen der zweiten Version des Programmcodes (V2) von der weiteren Instanz des Eingabemoduls (313) an die Arbeitsumgebung (209) des Webservers (203) in einem ersten Änderungsübertragungsschritt (125), wobei im Änderungsübertragungsschritt (125) die in der weiteren Instanz des Eingabemoduls (313) vorgenommenen Änderungen an der ersten Version des Programmcodes (V1) und die erste Version des Programmcodes (V1) übertragen werden;
Vergleichen der im Änderungsübertragungsschritt (125) übertragenen ersten Version des Programmcodes (V1) mit der in die Programmdatei (217) geschriebenen Version des Programmcodes in einem Vergleichsschritt (133);
Falls im Vergleichsschritt (133) ermittelt wird, dass die im Änderungsübertragungsschritt (125) übertragenen ersten Version des Programmcodes (V1) nicht mit der in die Programmdatei geschriebenen Version des Programmcodes übereinstimmt:
Ermitteln eines Synchronisationsfehlers in einem Fehlerermittlungsschritt (135); und
Übertragen der in die Programmdatei (217) geschriebenen Version des Programmcodes von der Arbeitsumgebung an die im weiteren Webbrowser (208) ausgeführte weitere Instanz des Eingabemoduls (313) in einem Versionsübertragungsschritt (137);
Anzeigen der übertragenen Version des Programmcodes in der im weiteren Webbrowser (208) ausgeführten weiteren Instanz des Eingabemoduls (313) in einem Versionsanzeigeschritt (139); und
Erneutes Ausführen des Änderungserstellungsschritts (123), des Änderungsübertragungsschritts (125) und des Vergleichsschritts (131);
Falls im Vergleichsschritt (133) ermittelt wird, dass die erste Version des Programmcodes (V1) mit der in die Programmdatei geschriebenen Version des Programmcodes übereinstimmt:
Schreiben der zweiten Version des Programmcodes (V2) in die Programmdatei (217) in der Arbeitsumgebung (209) in einem Änderungsschreibschritt (127); und
Übertragen der in die Programmdatei (217) geschriebenen zweiten Version des Programmcodes (V2) von der Arbeitsumgebung (209) an die im Webbrowser (206) ausgeführte Instanz des Eingabemoduls (311) des Client-Geräts (205) in einem zweiten Änderungsübertragungsschritt (129); und
Anzeigen der zweiten Version des Programmcodes (V2) in der im Webbrowser (206) ausgeführten Instanz des Eingabemoduls (311) des Client-Geräts (207) in einem Änderungsanzeigeschritt (131); oder
Ausführen des Übersetzungsmoduls (303) in der Arbeitsumgebung (209) und Übersetzen des in der ersten Programmiersprache erstellten und in die Programmdatei (217) geschriebenen Programmcodes durch das Übersetzungsmodul (303) in einen Programmcode der Binärsprache in einem Übersetzungsschritt (111);
Übertragen des Programmcodes in der Binärsprache von der Arbeitsumgebung (209) an die Steuerung (201) des Automatisierungssystems (200) in einem Binärcodeübertragungsschritt (113); und
Ausführen des Programmcodes in der Binärsprache durch die Steuerung (201) des Automatisierungssystems (200) und Steuern des Automatisierungssystems (200) auf Basis des Programmcodes in einem Ausführungsschritt (115).

2. Verfahren (100) nach Anspruch 1, wobei im Änderungsübertragungsschritt (125) und im zweiten Änderungsübertragungsschritt (129) von der zweiten Version des Programmcodes (V2) ausschließlich die in der weiteren Instanz des Eingabemoduls (313) vorgenommenen Änderungen an der ersten Version des Programmcodes (V1) übertragen werden.

3. Verfahren (100) nach einem der voranstehenden Ansprüche, wobei im Programmcodeübertragungsschritt (107) jede der im Codeerstellungsschritt (105) vorgenommenen Eingaben in einer individuellen Nachricht übertragen wird, und wobei im Änderungsübertragungsschritt (125) jeder der vorgenommenen Änderungen an der ersten Version des Programmcodes (V1) in einer individuellen Nachricht übertragen wird.

4. Verfahren (100) nach einem der voranstehenden Ansprüche, wobei das Übersetzungsmodul (303) ferner ein Analysemodul (305) zum Ausführen einer semantischen Analyse und/oder einer syntaktischen Analyse des in erstellten Programmcodes umfasst, ferner umfassend:
Ausführen einer globalen Analyse des in die Programmdatei (217) geschriebenen Programmcodes in der ersten Programmiersprache durch das Analysemodul (305) und Ermitteln von globalen Analyseergebnissen in einem globalen Analyseschritt (141), wobei die globale Analyse des Programmcodes eine semantische Analyse und/oder eine syntaktische Analyse des gesamten Programmcodes auf Basis einer Semantik und/oder einer Grammatik der ersten Programmiersprache umfasst;
Übertragen von im globalen Analyseschritt (141) ermittelten globalen Analyseergebnissen an die im Webbrowser (206) ausgeführte Instanz des Eingabemoduls (311) des Client-Geräts (205) und/oder an die im weiteren Webbrowser (208) ausgeführte weitere Instanz des Eingabemoduls (313) des weiteren Client-Geräts (207) in einem globalen Analyseergebnisübertragungsschritt (143); und
Anzeigen der übertragenen globalen Analyseergebnisse in der im Webbrowser (206) ausgeführten Instanz des Eingabemoduls (311) des Client-Geräts (205) und/oder in der im weiteren Webbrowser (208) ausgeführten weiteren Instanz des Eingabemoduls (313) des weiteren Client-Geräts (207) in einem globalen Analyseergebnisanzeigeschritt (145).

5. Verfahren (100) nach Anspruch 4, wobei die Übertragung der globalen Analyseergebnisse als eine Antwort des Webservers (203) auf eine Poll-Anfrage der im Webbrowser (206) ausgeführten Instanz des Eingabemoduls (311) des Client-Geräts (205) und/oder auf eine Poll-Anfrage der im weiteren Webbrowser (208) ausgeführten weiteren Instanz des Eingabemoduls (313) des weiteren Client-Geräts (207) ausgebildet ist.

6. Verfahren (100) nach einem der voranstehenden Ansprüche 4 bis 5, wobei globale Analyseergebnisse Fehlermeldungen bezüglich semantischer und/oder syntaktischer Fehler im erstellen Programmcode, im Programmcode verwendete Programmobjekte und Beziehungen zwischen den im Programmcode verwendeten Programmobjekte umfassen, und wobei Programmobjekte im Programmcode verwendete Variablen, Funktionen, Datentypen, Namensräume oder andere Objekte umfassen.

7. Verfahren (100) nach einem der voranstehenden Ansprüche 4 bis 6, wobei der globale Analyseschritt (141) ferner umfasst:
Bestimmen einer Analyseversion des in die Programmdatei (217) geschriebenen Programmcodes in der ersten Programmiersprache durch das Analysemodul (305) in einem Schnappschussschritt (147), wobei die Analyseversion des Programmcodes der zum Zeitpunkt der Ausführung des globalen Analyseschritts (141) in die Programmdatei (217) geschriebenen Version des Programmcodes entspricht; und
Ausführen der globalen Analyse des Programmcodes in der ersten Programmiersprache auf Basis der Analyseversion im globalen Analyseschritt (141).

8. Verfahren (100) nach einem der voranstehenden Ansprüche 4 bis 7, ferner umfassend:
Erstellen einer aktuellen Version des in die Programmdatei (217) geschriebenen Programmcodes in der ersten Programmiersprache durch das Analysemodul (305) in einem Aktualisierungsschritt (149), wobei eine aktuelle Version des in die Programmdatei (217) geschriebenen Programmcodes in der ersten Programmiersprache nach jeder Änderung des Programmcodes durch die Instanz des Eingabemoduls (311) des Client-Geräts (205) und/oder durch die weitere Instanz des Eingabemoduls (313) des weiteren Client-Geräts (207) erstellt wird;
Ausführen einer lokalen Analyse eines Teils des in die Programmdatei (217) geschriebenen Programmcodes in der ersten Programmiersprache durch das Analysemodul (305) auf Basis der aktuellen Version des Programmcodes und ermitteln von lokalen Analyseergebnissen in einem lokalen Analyseschritt (151);
Übertragen der im lokalen Analyseschritt (151) ermittelten lokalen Analyseergebnisse an die im Webbrowser (206) ausgeführte Instanz des Eingabemoduls (311) des Client-Geräts (205) und/oder an die im weiteren Webbrowser (208) ausgeführte weitere Instanz des Eingabemoduls (313) des weiteren Client-Geräts (207) in einem lokalen Analyseergebnisübertragungsschritt (153); und
Anzeigen der übertragenen lokalen Analyseergebnisse in der im Webbrowser (206) ausgeführten Instanz des Eingabemoduls (311) des Client-Geräts (205) und/oder in der im weiteren Webbrowser (208) ausgeführten weiteren Instanz des Eingabemoduls (313) des weiteren Client-Geräts (207) in einem lokalen Analyseergebnisanzeigeschritt (155), wobei die lokalen Analyseergebnisse automatische Vervollständigungen, Syntaxhervorhebungen und andere Eingabehilfen für Eingaben in der Instanz des Eingabemoduls (311) und/oder der weiteren Instanz des Eingabemoduls (313) umfassen.

9. Verfahren (100) nach Anspruch 8, wobei die Übertragung der lokalen Analyseergebnisse als eine Push-Nachricht des Webservers (203) an die im Webbrowser (206) ausgeführte Instanz des Eingabemoduls (311) des Client-Geräts (205) und/oder an die im weiteren Webbrowser (208) ausgeführte weitere Instanz des Eingabemoduls (313) des weiteren Client-Geräts (207) ausgebildet ist.

10. Verfahren (100) nach einem der voranstehenden Ansprüche 4 bis 9, wobei das Analysemodul (305) ein globales Analysenmodul (307) zum Ausführen der globalen Analyse und ein lokales Analysemodul (309) zum Ausführen der lokalen Analyse umfasst.

11. Verfahren (100) nach einem der voranstehenden Ansprüche, wobei der Übersetzungsschritt (111) ferner umfasst:
Übersetzen des Programmcodes in der ersten Programmiersprache in einen Programmcode in einer Hochsprache in einem ersten Teilübersetzungsschritt (157); und
Übersetzen des Programmcodes in der Hochsprache in den Programmcode in der Binärsprache in einem zweiten Teilübersetzungsschritt (159).

12. Verfahren (100) nach einem der voranstehenden Ansprüche, ferner umfassend:
Ausführen eines Debugging-Prozesses des in die Programmdatei (217) geschriebenen Programmcodes durch das Übersetzungsmodul (303) in einem Debuggingschritt (161), wobei der Debuggingschritt (161) ferner umfasst:
Übersetzen des in der ersten Programmiersprache generierten und in die Programmdatei (217) geschriebenen Programmcodes der ersten Programmiersprache in einen Programmcode der Binärsprache in einem Debuggingübersetzungsschritt (163);
Übertragen des im Debuggingübersetzungsschritt (163) übersetzten Programmcodes in der Binärsprache von der Arbeitsumgebung (209) an die Steuerung (201) des Automatisierungssystems (200) in einem Debuggingübertragungsschritt (165);
Ausführen des Programmcodes in der Binärsprache durch die Steuerung (201) des Automatisierungssystems (200) in einem Debuggingausführungsschritt (167); und
Übertragen von Informationen bezüglich des ausgeführten Programmcodes an die im Webbrowser (206) ausgeführte Instanz des Eingabemoduls (311) des Client-Geräts (205) und/oder an die im weiteren Webbrowser (208) ausgeführte weitere Instanz des Eingabemoduls (313) des weiteren Client-Geräts (207) in einem Debugginginformationsübertragungsschritt (169).

13. Verfahren (100) nach Anspruch 12, wobei der Debuggingübersetzungsschritt (163) ferner umfasst:
Setzen wenigstens eines Breakpoints im Programmcode in einem Breakpointsetzungsschritt (171); und
Ausführen des Programmcodes in der Binärsprache durch die Steuerung (201) des Automatisierungssystems (200) bis zum Breakpoint im Debuggingausführungsschritt (167).

14. Verfahren (100) nach einem der voranstehenden Ansprüche, wobei auf dem Webserver (203) eine Mehrzahl von einander separierter Arbeitsumgebungen (209) generiert ist, wobei in jeder Arbeitsumgebung (209) das Übersetzungsmodul (303) ausführbar, und wobei in jeder Arbeitsumgebung (209) ein individuelles Programmierprojekt durchführbar ist.

15. Automatisierungssystem (200) mit einer Steuerung (201) und einem mit der Steuerung (201) verbundenen Webserver (203), wobei der Webserver (203) mit einem Client-Gerät (205) und einem weiteren Client-Gerät (201) verbindbar ist, wobei auf dem Webserver (203) eine Arbeitsumgebung (209) und eine webbasierte Entwicklungsumgebung (300) installiert sind, und wobei das Automatisierungssystem (200) eingerichtet ist, das Verfahren (100) nach einem der voranstehenden Ansprüche 1 bis 14 auszuführen.

## Claims

1. A method (100) for creating and executing a control program for controlling an automation system (200) having a controller (201) and a web server (203) connected to the controller (201), comprising:
establishing a connection between a client device (205) and the web server (203) via a web browser (206) executed on the client device (205) in a server connecting step (101), wherein a web-based development environment (300) having an input module (301) for creating a program code and a translation module (303) for translating the created program code is installed on the web server (203), wherein the input module may be executed in the web browser (206), and wherein the translation module (303) is configured to translate a program code of a first programming language into a program code of a binary language;
executing an instance of the input module (311) in the web browser (206) by the client device (205) and establishing a connection of the client device (205) to a work environment (209) of the web server (203) and to the translation module (303) of the work environment (209) via the instance of the input module (311) executed in the web browser (206) in a work environment connecting step (103), wherein the translation module (303) may be executed within the work environment;
creating a first version of a program code (V1) of a control program for the automation system (200) in the first programming language in the instance of the input module (311) executed in the web browser (206) in a code creating step (105);
transferring the created first version of the program code (V1) from the instance of the input module (311) executed in the web browser (206) to the work environment (209) of the web server (203) in a program code transferring step (107);
writing the first version of the program code (V1) to a program file (217) in the work environment (209) in a writing step (109), wherein the program file (217) is stored in a primary memory of the web server (203), wherein the program file (217) comprises an association file associated with the program file and stored in a permanent memory of the web server (203), and wherein the first version of the program code (V1) written to the program file (217) may be stored in the association file;
establishing a further connection between a further client device (207) and the web server (203) via a further web browser (208) executed on the further client device (207) in a further server connecting step (117);
executing a further instance of the input module (313) in the further web browser (208) of the further client device (207), and establishing a further connection of the further client device (207) to the work environment (209) of the web server (203) via the further instance of the input module (313) executed in the further web browser (208) in a further work environment connecting step (119);
transferring the first version of the program code (V1) written to the program file (217) to the further instance of the input module (313) executed in the further web browser (208) of the further client device (207) in a further program code transferring step (121);
making changes to the first version of the program code (V1) and creating a second version of the program code (V2) in the first programming language in the further instance of the input module (313) executed in the further web browser (208) of the further client device (207) in a modification creating step (123);
transferring the second version of the program code (V2) from the further instance of the input module (313) to the work environment (209) of the web server (203) in a first modification transferring step (125), wherein in the modification transferring step (125) the modifications carried out to the first version of the program code (V1) in the further instance of the input module (313) and the first version of the program code (V1) are transferred comparing the first version of the program code (V1) transferred in the modification transferring step (125) with the version of the program code written to the program file (217) in a comparing step (133);
determining a synchronization error in an error determining step (135) if the first version of the program code (V1) does not match the version of the program code written to the program file;
if it is determined in the modification transferring step (125) that the first version of the program code (V1) transferred in the modification transferring step (125) does not correspond to the version of the program code written to the program file:
determining a synchronization error in a error-determining step (135); and
transferring the version of the program code written to the program file (217) from the work environment to the further instance of the input module (313) executed in the further web browser (208) in a version transferring step (137); and
displaying the transferred version of the program code in the further instance of the input module (313) executed in the further web browser (208) in a version displaying step (139); and
re-executing the modification generating step (123) of the modification transferring step (125) and of the comparing step (131);
if it is determined in a comparing step (133) that the first version of the program code (V1) does correspond to the version of the program code written to the program file:
writing the second version of the program code (V2) to the program file (217) in the work environment (209) in a modification writing step (127); and
transferring the second version of the program code (V2) written to the program file (217) from the work environment (209) to the instance of the input module (311) of the client device (205) executed in the web browser (206) in a second modification transferring step (129); and
displaying the second version of the program code (V2) in the instance of the input module (311) of the client device (207) executed in the web browser (206) in a modification displaying step (131); or
executing the translation module (303) in the work environment (209) and translating the program code created in the first programming language and written to the program file (217) with the aid of the translation module (303) into a program code of the binary language in a translating step (111);
transferring the program code in the binary language from the work environment (209) to the controller (201) of the automation system (200) in a binary code transferring step (113); and
executing the program code in the binary language with the aid of the controller (201) of the automation system (200), and controlling the automation system (200) based on the program code in an executing step (115).

2. The method (100) according to claim 1, wherein in the modification transferring step (125) and in the second modification transferring step (129) of the second version of the program code (V2), only the changes made to the first version of the program code (V1) in the further instance of the input module (313) are transferred.

3. The method (100) according to any one of the preceding claims, wherein in the program code transferring step (107) each of the inputs made in the code creating step (105) is transferred in an individual message, and wherein in the modification transferring step (125) each of the changes made to the first version of the program code (V1) is transferred in an individual message.

4. The method (100) according to any one of the preceding claims, wherein the translation module (303) further comprises an analysis module (305) for performing a semantic analysis and/or a syntactic analysis of the program code generated, further comprising:
performing a global analysis of the program code written to the program file (217) in the first programming language by the analysis module (305) and determining global analysis results in a global analysis step (141), wherein the global analysis of the program code comprises a semantic analysis and/or a syntactic analysis of the entire program code based on a semantics and/or a grammar of the first programming language;
transferring global analysis results determined in the global analysis step (141) to the instance of the input module (311) of the client device (205) executed in the web browser (206) and/or to the further instance of the input module (313) of the further client device (207) executed in the further web browser (208) in a global analysis result transferring step (143); and
displaying the transferred global analysis results in the instance of the input module (311) of the client device (205) executed in the web browser (206) and/or in the further instance of the input module (313) of the further client device (207) executed in the further web browser (208) in a global analysis result displaying step (145).

5. The method (100) according to claim 4, wherein the transfer of the global analysis results is embodied as a response of the web server (203) to a poll request of the instance of the input module (311) of the client device (205) executed in the web browser (206) and/or to a poll request of the further instance of the input module (313) of the further client device (207) executed in the further web browser (208).

6. The method (100) according to any of the preceding claims 4 to 5, wherein global analysis results comprise error messages regarding semantic and/or syntactic errors in the created program code, program objects used in the program code, and relationships between the program objects used in the program code, and wherein program objects comprise variables, functions, data types, namespaces, or other objects used in the program code.

7. The method (100) according to any one of the preceding claims 4 to 6, wherein the global analysis step (141) further comprises:
determining an analysis version of the program code written to the program file (217) in the first programming language by the analysis module (305) in a snapshot step (147), wherein the analysis version of the program code corresponds to the version of the program code written to the program file (217) at the time of execution of the global analysis step (141); and
executing the global analysis of the program code in the first programming language based on the analysis version in the global analysis step (141).

8. The method (100) according to any one of the preceding claims 4 to 7, further comprising:
creating a current version of the program code written to the program file (217) in the first programming language by the analysis module (305) in an updating step (149), wherein a current version of the program code written to the program file (217) in the first programming language is created after each change of the program code by the instance of the input module (311) of the client device (205) and/or by the further instance of the input module (313) of the further client device (207);
performing a local analysis of a part of the program code written to the program file (217) in the first programming language by the analysis module (305) based on the current version of the program code, and determining local analysis results in a local analysis step (151);
transferring the local analysis results determined in the local analysis step (151) to the instance of the input module (311) of the client device (205) executed in the web browser (206) and/or to the further instance of the input module (313) of the further client device (207) executing in the further web browser (208) in a local analysis result transferring step (153); and
displaying the transferred local analysis results in the instance of the input module (311) of the client device (205) executed in the web browser (206) and/or in the further instance of the input module (313) of the further client device (207) executed in the further web browser (208) in a local analysis result displaying step (155), wherein the local analysis results comprise auto-completions, syntax highlighting and other input assistance for inputs in the instance of the input module (311) and/or the further instance of the input module (313).

9. The method (100) according to claim 8, wherein the transfer of the local analysis results is embodied as a push message from the web server (203) to the instance of the input module (311) of the client device (205) executed in the web browser (206) and/or to the further instance of the input module (313) of the further client device (207) executed in the further web browser (208).

10. The method (100) according to any one of the preceding claims 4 to 9, wherein the analysis module (305) comprises a global analysis module (307) for performing the global analysis and a local analysis module (309) for performing the local analysis.

11. The method (100) according to any one of the preceding claims, wherein the translating step (111) further comprises:
translating the program code in the first programming language into a program code in a high-level language in a first partial translating step (157); and
translating the program code in the high-level language into the program code in the binary language in a second partial translating step (159).

12. The method (100) according to any one of the preceding claims, further comprising:
performing a debugging process of the program code written to the program file (217) with the aid of the translation module (303) in a debugging step (161), wherein the debugging step (161) further comprises:
translating the program code of the first programming language generated in the first programming language and written to the program file (217) into a program code of the binary language in a debugging translation step (163);
transferring the program code translated in the debugging translation step (163) in the binary language from the work environment (209) to the controller (201) of the automation system (200) in a debugging transfer step (165);
executing the program code in the binary language by the controller (201) of the automation system (200) in a debugging execution step (167); and
transferring information regarding the executed program code to the instance of the input module (311) of the client device (205) executed in the web browser (206) and/or to the further instance of the input module (313) of the further client device (207) executed in the further web browser (208) in a debugging information transferring step (169).

13. The method (100) according to claim 12, wherein the debugging translation step (163) further comprises:
setting at least one breakpoint in the program code in a breakpoint setting step (171); and executing the program code in the binary language by the controller (201) of the automation system (200) up to the breakpoint in the debugging execution step (167).

14. The method (100) according to any one of the preceding claims, wherein a plurality of mutually separated work environments (209) is generated on the web server (203), wherein the translation module (303) may be executed in each work environment (209), and wherein an individual programming project may be executed in each work environment (209).

15. An automation system (200) comprising a controller (201) and a web server (203) connected to the controller (201), wherein the web server (203) is connectable to a client device (205) and to a further client device (201), wherein a work environment (209) and a web-based development environment (300) are installed on the web server (203), and wherein the automation system (200) is set up to execute the method (100) according to any one of the preceding claims 1 to 14.

## Revendications

1. Procédé (100) pour créer et exécuter un programme de commande pour commander un système d'automatisation (200) comportant un dispositif de commande (201) et un serveur web (203) connecté au dispositif de commande (201), comprenant :
l'établissement d'une connexion entre un appareil client (205) et le serveur web (203) par l'intermédiaire d'un navigateur web (206) exécuté sur l'appareil client (205) lors d'une étape de connexion au serveur (101), un environnement de développement web (300) étant installé sur le serveur web (203) et comprenant un module d'entrée (301) pour créer un code de programme et un module de traduction (303) pour traduire le code de programme créé, le module d'entrée étant exécutable dans le navigateur web (206), et le module de traduction (303) étant conçu pour traduire un code de programme d'un premier langage de programmation en un code de programme en langage binaire ;
l'exécution d'une instance du module d'entrée (311) dans le navigateur web (206) par l'appareil client (205) et l'établissement d'une connexion de l'appareil client (205) à un environnement de travail (209) du serveur web (203) et au module de traduction (303) de l'environnement de travail (209) par l'intermédiaire de l'instance du module d'entrée (311) exécutée dans le navigateur web (206) lors d'une étape de connexion à l'environnement de travail (103), le module de traduction (303) pouvant être exécuté au sein de l'environnement de travail ;
la création d'une première version d'un code de programme (V1) d'un programme de commande pour le système d'automatisation (200) dans le premier langage de programmation dans l'instance du module d'entrée (311) exécutée dans le navigateur web (206) lors d'une étape de création de code (105) ;
la transmission de la première version créée du code de programme (V1) de l'instance du module d'entrée (311) exécutée dans le navigateur web (206) à l'environnement de travail (209) du serveur web (203) lors d'une étape de transmission de code de programme (107) ;
l'écriture de la première version du code de programme (V1) dans un fichier de programme (217) dans l'environnement de travail (209) lors d'une étape d'écriture (109), le fichier de programme (217) étant stocké dans une mémoire principale du serveur web (203), le fichier de programme (217) comprenant un fichier d'association associé au fichier de programme et stocké dans une mémoire permanente du serveur web (203), et la première version du code de programme (V1) écrite dans le fichier de programme (217) pouvant être stockée dans le fichier d'association ;
l'établissement d'une autre connexion entre un autre appareil client (207) et le serveur web (203) par l'intermédiaire d'un autre navigateur web (208) exécuté sur l'autre appareil client (207) lors d'une autre étape de connexion au serveur (117) ;
l'exécution d'une autre instance du module d'entrée (313) dans l'autre navigateur web (208) de l'autre appareil client (207) et l'établissement d'une autre connexion de l'autre appareil client (207) à l'environnement de travail (209) du serveur web (203) par l'intermédiaire de l'autre instance du module d'entrée (313) exécutée dans l'autre navigateur web (208) lors d'une autre étape de connexion à l'environnement de travail (119) ;
la transmission de la première version du code de programme (V1) écrite dans le fichier de programme (217) à l'autre instance du module d'entrée (313) exécutée dans l'autre navigateur web (208) de l'autre appareil client (207) lors d'une autre étape de transmission de code de programme (121) ;
la réalisation de modifications sur la première version du code de programme (V1) et la création d'une seconde version du code de programme (V2) dans le premier langage de programmation dans l'autre instance du module d'entrée (313) exécutée dans l'autre navigateur web (208) de l'autre appareil client (207) lors d'une étape de création de modifications (123) ;
la transmission de la seconde version du code de programme (V2) de l'autre instance du module d'entrée (313) à l'environnement de travail (209) du serveur web (203) lors d'une première étape de transmission de modifications (125), les modifications réalisées sur la première version du code de programme (V1) dans l'autre instance du module d'entrée (313) et la première version du code de programme (V1) étant transmises lors de l'étape de transmission de modifications (125) ;
la comparaison de la première version du code de programme (V1) transmise lors de l'étape de transmission de modifications (125) à la version du code de programme écrite dans le fichier de programme (217) lors d'une étape de comparaison (133) ;
si, lors de l'étape de comparaison (133), il est déterminé que la première version du code de programme (V1) transmise lors de l'étape de transmission de modifications (125) ne correspond pas à la version du code de programme écrite dans le fichier de programme :
la détermination d'une erreur de synchronisation lors d'une étape de détermination d'erreur (135) ; et
la transmission de la version du code de programme écrite dans le fichier de programme (217) de l'environnement de travail à l'autre instance du module d'entrée (313) exécutée dans l'autre navigateur web (208) lors d'une étape de transmission de version (137) ;
l'affichage de la version transmise du code de programme dans l'autre instance du module d'entrée (313) exécutée dans l'autre navigateur web (208) lors d'une étape d'affichage de version (139) ; et
l'exécution à nouveau de l'étape de création de modifications (123), de l'étape de transmission de modifications (125) et de l'étape de comparaison (131) ; si, lors de l'étape de comparaison (133), il est déterminé que la première version du code de programme (V1) correspond à la version du code de programme écrite dans le fichier de programme :
l'écriture de la seconde version du code de programme (V2) dans le fichier de programme (217) dans l'environnement de travail (209) lors d'une étape d'écriture de modifications (127) ; et
la transmission de la seconde version du code de programme (V2) écrite dans le fichier de programme (217) de l'environnement de travail (209) à l'instance du module d'entrée (311) de l'appareil client (205) exécutée dans le navigateur web (206) lors d'une seconde étape de transmission de modifications (129) ; et
l'affichage de la seconde version du code de programme (V2) dans l'instance du module d'entrée (311) de l'appareil client (207) exécutée dans le navigateur web (206) lors d'une étape d'affichage de modifications (131) ; ou
l'exécution du module de traduction (303) dans l'environnement de travail (209) et la traduction du code de programme créé dans le premier langage de programmation et écrit dans le fichier de programme (217) par le module de traduction (303) en un code de programme en langage binaire lors d'une étape de traduction (111) ; la transmission du code de programme en langage binaire de l'environnement de travail (209) au dispositif de commande (201) du système d'automatisation (200) lors d'une étape de transmission de code binaire (113) ; et
l'exécution du code de programme en langage binaire par le dispositif de commande (201) du système d'automatisation (200) et la commande du système d'automatisation (200) sur la base du code de programme lors d'une étape d'exécution (115).

2. Procédé (100) selon la revendication 1, dans lequel, lors de l'étape de transmission de modifications (125) et de la seconde étape de transmission de modifications (129), seules les modifications réalisées sur la première version du code de programme (V1) dans l'autre instance du module d'entrée (313) sont transmises par la seconde version du code de programme (V2).

3. Procédé (100) selon l'une des revendications précédentes, dans lequel, lors de l'étape de transmission de code de programme (107), chacune des entrées effectuées lors de l'étape de création de code (105) est transmise dans un message individuel, et dans lequel, lors de l'étape de transmission de modifications (125), chacune des modifications réalisées sur la première version du code de programme (V1) est transmise dans un message individuel.

4. Procédé (100) selon l'une des revendications précédentes, dans lequel le module de traduction (303) comprend en outre un module d'analyse (305) pour effectuer une analyse sémantique et/ou une analyse syntaxique du code de programme créé, comprenant en outre :
l'exécution par le module d'analyse (305) d'une analyse globale du code de programme écrit dans le fichier de programme (217) dans le premier langage de programmation et la détermination de résultats d'analyse globale lors d'une étape d'analyse globale (141), l'analyse globale du code de programme comprenant une analyse sémantique et/ou une analyse syntaxique de l'ensemble du code de programme sur la base d'une sémantique et/ou d'une grammaire du premier langage de programmation ;
la transmission de résultats d'analyse globale déterminés lors de l'étape d'analyse globale (141) à l'instance du module d'entrée (311) de l'appareil client (205) exécutée dans le navigateur web (206) et/ou à l'autre instance du module d'entrée (313) de l'autre appareil client (207) exécutée dans l'autre navigateur web (208) lors d'une étape de transmission de résultat d'analyse globale (143) ; et
l'affichage des résultats d'analyse globale transmis dans l'instance du module d'entrée (311) de l'appareil client (205) exécutée dans le navigateur web (206) et/ou dans l'autre instance du module d'entrée (313) de l'autre appareil client (207) exécutée dans l'autre navigateur web (208) lors d'une étape d'affichage de résultat d'analyse globale (145).

5. Procédé (100) selon la revendication 4, dans lequel la transmission des résultats d'analyse globale est réalisée sous la forme d'une réponse du serveur web (203) à une demande de sondage de l'instance du module d'entrée (311) de l'appareil client (205) exécutée dans le navigateur web (206) et/ou à une demande de sondage de l'autre instance du module d'entrée (313) de l'autre appareil client (207) exécutée dans l'autre navigateur web (208).

6. Procédé (100) selon l'une des revendications 4 à 5 précédentes, dans lequel les résultats d'analyse globale comprennent des messages d'erreur concernant des erreurs sémantiques et/ou syntaxiques dans le code de programme créé, des objets de programme utilisés dans le code de programme et des relations entre les objets de programme utilisés dans le code de programme, et dans lequel les objets de programme comprennent des variables, des fonctions, des types de données, des espaces de noms ou d'autres objets, utilisés dans le code du programme.

7. Procédé (100) selon l'une des revendications 4 à 6 précédentes, dans lequel l'étape d'analyse globale (141) comprend en outre :
la détermination d'une version d'analyse du code de programme écrit dans le fichier de programme (217) dans le premier langage de programmation par le module d'analyse (305) lors d'une étape de création d'instantané (147), la version d'analyse du code de programme correspondant à la version du code de programme écrite dans le fichier de programme (217) au moment de l'exécution de l'étape d'analyse globale (141) ; et
l'exécution de l'analyse globale du code de programme dans le premier langage de programmation sur la base de la version d'analyse lors de l'étape d'analyse globale (141) .

8. Procédé (100) selon l'une des revendications 4 à 7 précédentes, comprenant en outre :
la création par le module d'analyse (305) d'une version actuelle du code de programme écrit dans le fichier de programme (217) dans le premier langage de programmation lors d'une étape de mise à jour (149), une version actuelle du code de programme écrit dans le fichier de programme (217) dans le premier langage de programmation étant créée après chaque modification du code de programme par l'instance du module d'entrée (311) de l'appareil client (205) et/ou par l'autre instance du module d'entrée (313) de l'autre appareil client (207) ; l'exécution par le module d'analyse (305) d'une analyse locale d'une partie du code de programme écrit dans le fichier de programme (217) dans le premier langage de programmation sur la base de la version actuelle du code de programme et la détermination de résultats d'analyse locale lors d'une étape d'analyse locale (151) ;
la transmission des résultats d'analyse locale déterminés lors de l'étape d'analyse locale (151) à l'instance du module d'entrée (311) de l'appareil client (205) exécutée dans le navigateur web (206) et/ou à l'autre instance du module d'entrée (313) de l'autre appareil client (207) exécutée dans l'autre navigateur web (208) lors d'une étape de transmission de résultats d'analyse locale (153) ; et
l'affichage des résultats d'analyse locale transmis dans l'instance du module d'entrée (311) de l'appareil client (205) exécutée dans le navigateur web (206) et/ou dans l'autre instance du module d'entrée (313) de l'autre appareil client (207) exécutée dans l'autre navigateur web (208) lors d'une étape d'affichage de résultats d'analyse locale (155), les résultats d'analyse locale comprenant des complétions automatiques, des surlignages de syntaxe et d'autres aides à la saisie pour des entrées dans l'instance du module d'entrée (311) et/ou l'autre instance du module d'entrée (313).

9. Procédé (100) selon la revendication 8, dans lequel la transmission des résultats d'analyse locale est réalisée sous la forme d'un message push du serveur web (203) à l'instance du module d'entrée (311) de l'appareil client (205) exécutée dans le navigateur web (206) et/ou à l'autre instance du module d'entrée (313) de l'autre appareil client (207) exécutée dans l'autre navigateur web (208).

10. Procédé (100) selon l'une des revendications 4 à 9 précédentes, dans lequel le module d'analyse (305) comprend un module d'analyse globale (307) pour exécuter l'analyse globale et un module d'analyse locale (309) pour exécuter l'analyse locale.

11. Procédé (100) selon l'une des revendications précédentes, dans lequel l'étape de traduction (111) comprend en outre :
la traduction du code de programme dans le premier langage de programmation en un code de programme dans un langage de haut niveau lors d'une première étape de traduction partielle (157) ; et
la traduction du code de programme dans le langage de haut niveau en le code de programme en langage binaire lors d'une seconde étape de traduction partielle (159).

12. Procédé (100) selon l'une des revendications précédentes, comprenant en outre :
l'exécution par le module de traduction (303) d'un processus de débogage du code de programme écrit dans le fichier de programme (217) lors d'une étape de débogage (161), l'étape de débogage (161) comprenant en outre :
la traduction du code de programme dans le premier langage de programmation, généré dans le premier langage de programmation et écrit dans le fichier de programme (217), en un code de programme en langage binaire lors d'une étape de traduction de débogage (163) ;
la transmission du code de programme en langage binaire traduit lors de l'étape de traduction de débogage (163) de l'environnement de travail (209) au dispositif de commande (201) du système d'automatisation (200) lors d'une étape de transmission de débogage (165) ;
l'exécution du code de programme en langage binaire par le dispositif de commande (201) du système d'automatisation (200) lors d'une étape d'exécution de débogage (167) ; et
la transmission d'informations concernant le code de programme exécuté à l'instance du module d'entrée (311) de l'appareil client (205) exécutée dans le navigateur web (206) et/ou à l'autre instance du module d'entrée (313) de l'autre appareil client (207) exécutée dans l'autre navigateur web (208) lors d'une étape de transmission d'informations de débogage (169).

13. Procédé (100) selon la revendication 12, dans lequel l'étape de traduction de débogage (163) comprend en outre :
le positionnement d'au moins un point d'arrêt dans le code de programme lors d'une étape de positionnement de point d'arrêt (171) ; et
l'exécution du code de programme en langage binaire par le dispositif de commande (201) du système d'automatisation (200) jusqu'au point d'arrêt lors de l'étape d'exécution de débogage (167).

14. Procédé (100) selon l'une des revendications précédentes, dans lequel une pluralité d'environnements de travail (209) séparés les uns des autres sont générés sur le serveur web (203), dans lequel le module de traduction (303) est exécutable dans chaque environnement de travail (209), et dans lequel un projet de programmation individuel peut être exécuté dans chaque environnement de travail (209).

15. Système d'automatisation (200) comprenant un dispositif de commande (201) et un serveur web (203) connecté au dispositif de commande (201), dans lequel le serveur web (203) peut être connecté à un appareil client (205) et à un autre appareil client (201), dans lequel un environnement de travail (209) et un environnement de développement web (300) sont installés sur le serveur web (203), et dans lequel le système d'automatisation (200) est conçu pour mettre en œuvre le procédé (100) selon l'une des revendications 1 à 14.
